# EUROPÄISCHE PATENTSCHRIFT

(11) **EP 3 706 925 B1**
(45) Veröffentlichungstag und Bekanntmachung des Hinweises auf die Patenterteilung: **07.01.2026**
(21) Anmeldenummer: 18799726.7
(22) Anmeldetag: 06.11.2018
(51) Int. Cl.: B08B 3/02, B08B 9/032, B08B 5/02, B63C 11/02

(54) **MOBILE REINIGUNGSEINHEIT ZUR REINIGUNG VON ATEMGERÄTEN**
MOBILE CLEANING UNIT FOR CLEANING BREATHING APPARATUS
UNITÉ DE NETTOYAGE MOBILE POUR LE NETTOYAGE D'APPAREILS RESPIRATOIRES

(30) Priorität: 07.11.2017 DE 102017219763
(43) Veröffentlichungstag der Anmeldung: 16.09.2020
(73) Patentinhaber: MEIKO Maschinenbau GmbH & Co. KG, 77652 Offenburg (DE)
(72) Erfinder: FALK, Herbert, 77654 Offenburg (DE); PAULAT, Manuel, 77796 Mühlenbach (DE); SCHERER, Marc, 77716 Hofstetten (DE); SIMUNDIC, Marijan, 77797 Ohlsbach (DE)
(74) Vertreter: Altmann Stößel Dick Patentanwälte PartG mbB
(86) Internationale Anmeldenummer: PCT/EP2018/080281
(87) Internationale Veröffentlichungsnummer: WO 2019/091956

(56) Entgegenhaltungen:
- WO-A1-2013/024455
- DE-B3- 102012 220 646

## Beschreibung

### Technisches Gebiet

Die Erfindung betrifft eine mobile Reinigungseinheit und ein Verfahren zur Reinigung und optional zusätzlich auch zur Desinfektion von Atemgeräten oder auch Bestandteilen von Atemgeräten. Derartige Vorrichtungen und Verfahren können allgemein eingesetzt werden, um Atemgeräte oder Bestandteile derselben zu reinigen, beispielsweise Atemgeräte für Rettungskräfte wie Feuerwehr, technische Hilfsorganisationen oder Rettungssanitäter, Atemgeräte für Taucher oder allgemein Personen in lebensfeindlichen oder kritischen Arbeitsumgebungen sowie für Streitkräfte und Sicherheitskräfte wie beispielsweise Polizisten. Auch für Atemgeräte im medizinischen Bereich, beispielsweise Atemmasken für Sauerstoffversorgung und Operationen, lassen sich die vorgeschlagenen Vorrichtungen und Verfahren einsetzen. Insbesondere kommt allgemein die Reinigung von Atemmasken oder Lungenautomaten als Einsatzgebiet in Betracht.

### Technischer Hintergrund

Atemgeräte wie beispielsweise Atemschutzmasken oder Lungenautomaten, sind in der Regel Bestandteil der persönlichen Schutzausrüstung beispielsweise von Rettungskräften, Streitkräften oder Sicherheitskräften. So ist aus dem Stand der Technik eine Vielzahl von Atemgeräten für unterschiedliche Einsatzzwecke bekannt. Beispielsweise verwenden Rettungskräfte wie Feuerwehren Atemschutzmasken mit Filtern zur Entfernung schädlicher Bestandteile aus der angesaugten Atemluft. In vielen Fällen wird jedoch, alternativ oder zusätzlich zu einem Filter, ein so genannter Lungenautomat verwendet, über welchen der Benutzer mit einem Atemgas, beispielsweise Pressluft, beatmet werden kann. Lungenautomaten, welche häufig auch als Atemregler bezeichnet werden, ermöglichen es allgemein einem Benutzer, aus einer Druckgasflasche oder einem anderen Druckgasanschluss zu atmen und sich auf diese Weise beispielsweise unter Wasser oder in einer anderen, nicht atembaren oder giftigen Atmosphäre aufzuhalten. Dazu wird das Druckgas, beispielsweise komprimierte Luft, aus dem Druckgasanschluss durch den Lungenautomaten auf einen in einer Arbeitsumgebung des Benutzers herrschenden Druck angepasst.

Die Atemgeräte oder Bestandteile derselben müssen in der Regel nach jedem Einsatz gereinigt, hygienisiert, getrocknet, geprüft und gegebenenfalls instandgesetzt und verpackt werden. Mit der Reinigung sollen alle Verschmutzungen infolge eines Gebrauchs oder einer Lagerung entfernt werden, so dass die Atemgeräte makroskopisch sauber und hygienisch einwandfrei bereitgestellt werden können, beispielsweise für die nächsten Schritte einer Aufbereitung. Dieselben Anforderungen gelten in der Regel auch für andere Bestandteile von Atemgeräten, wie beispielsweise Anbau- und Zubehörteile von Atemmasken, wie beispielsweise Filter oder Lungenautomaten. Da Atemgeräte bzw. deren Bestandteile in der Regel sicherheitsrelevante Vorrichtungen sind, sind bei der Reinigung dieser Vorrichtungen mehrere Anforderungen zu beachten. Neben einer ausreichenden Reinigung und Hygienisierung ist beispielsweise in vielen Fällen zu beachten, dass Zubehörteile aus technischen Gründen den jeweiligen Atemmasken zugeordnet bleiben müssen. Weiterhin besteht in der Regel die Anforderung, dass gasführende Bereiche bestimmter Elemente von Atemgeräten, beispielsweise gasführende Bereiche von Lungenautomaten, nicht mit Reinigungsfluid, beispielsweise nicht mit Wasser und/oder Reinigungslösung, in Berührung kommen dürfen.

In vielen Fällen werden Atemgeräte, wie beispielsweise Atemmasken und deren Zubehör, entweder von Hand gereinigt oder in modifizierten Wäschewaschmaschinen mit Hilfe von Schutzbeuteln und/oder mit Hilfe von Adaptern gewaschen. Beispielsweise ist aus EP 0 935 687 B1 allgemein eine Waschmaschine bekannt, welche einen Laugenbehälter mit einer Trommel aufweist. Ein Mantel der Trommel weist eine zum Trommelinneren gerichtete Wölbestruktur auf, wobei auf zum Trommeläußeren gerichteten Randkonturen der Wölbung in ihren Eckpunkten Löcher angeordnet sind. Mit derartigen Waschmaschinen sind grundsätzlich besonders schonende Reinigungen von Ausrüstungsgegenständen für Rettungskräfte möglich.

Aus EP 1 088 928 A1 ist ein Haltesystem für Atemschutzmasken in einer Wäschebehandlungsmaschine bekannt. Das Haltesystem weist einen Tragbügel auf, welcher in einer Trommel der Wäschebehandlungsmaschine mitdrehend angeordnet ist und mit welchem die Atemschutzmasken verbunden werden können.

Aus DE 200 03 743 U1 und aus DE 298 22 172 U1 sind jeweils Vorrichtungen zum Behandeln von Schutzanzügen bekannt. Dabei werden Kleiderbügel verwendet, welche flexible Luftaustrittsdüsen umfassen. Die Kleiderbügel sind jeweils an einer Schwenkvorrichtung befestigt. Eine Reinigung von Atemgeräten ist allgemein mittels der gezeigten Vorrichtungen nicht oder nur schwer möglich.

Aus DE 10 2005 033 618 B3 ist eine Vorrichtung zur Reinigung von Atemschutzmasken bekannt. Die Vorrichtung umfasst ein verschließbares Gehäuse sowie mindestens eine in einem Träger angeordnete Aufnahme für mindestens eine Atemschutzmaske. Weiterhin sind eine Düsenanordnung und eine Bürstenanordnung vorgesehen, wobei durch eine Bewegung der Atemschutzmasken eine Bebürstung der Atemschutzmasken erfolgt. Mittels der offenbarten Vorrichtung ist allerdings eine individuelle Zuordnung und Reinigung von Zubehörteilen von Masken nicht möglich. Weiterhin ist die Reinigung von gasführenden Elementen, wie beispielsweise Lungenautomaten, mit der offenbarten Vorrichtung nicht möglich. Auch aus DE 200 03 744 U1 ist eine Vorrichtung zum Reinigen, Desinfizieren und Trocknen von Atemschutzmasken bekannt, welche ein Tragegestell mit einem zugeordneten Düsensystem und einzelnen Behandlungsplätzen aufweist. Auch diese Vorrichtung ist grundsätzlich nicht zur Reinigung von gasführenden Elementen und Zubehörteilen geeignet.

Aus DE 10 2007 009 936 A1 ist eine Reinigungsvorrichtung für Pressluftatmer bekannt. Diese weist einen durch ein Schutzgitter begrenzten Aufnahmeraum sowie rotierende Düsenträger auf. Die Düsenträger befinden sich dabei außerhalb des Schutzgitters. Nachteilig an der dargestellten Vorrichtung ist jedoch, dass Reinigungsflüssigkeit in gasführende Bereiche eindringen kann.

Die Reinigung von empfindlichen Bauelementen von Atemgeräten, wie beispielsweise Lungenautomaten, erfolgt hingegen in der Regel manuell. Gegebenenfalls kann eine manuelle Reinigung durch ein Einlegen in Ultraschall-Reinigungsgeräte unterstützt werden. Aus DE 10 2007 012 768 B4 sind jedoch ein Verfahren und eine Vorrichtung zur Reinigung von Lungenautomaten bekannt. Dabei werden die zu reinigenden Gegenstände auf Halterungen eines rotierenden Elements aufgesteckt und mehrmals in ein Flüssigkeitsbad mit Reinigungsflüssigkeit, Desinfektionsflüssigkeit und Spülflüssigkeit eingetaucht. Lungenautomaten werden dabei zuerst zur Dichtsetzung zwischen Ventil und Schlauchanschluss mit Druckluft beaufschlagt und danach in das Flüssigkeitsbad eingetaucht. Nachteilig an derartigen Tauchverfahren ist jedoch, dass aufwändige Halterungen mit entsprechenden Aktoren erforderlich sind, um durch entsprechende Bewegungen eine Entfernung von Reinigungsfluid aus den verschiedenen Hohlräumen nach der Reinigung zu gewährleisten.

DE 100 20 835 A1 beschreibt eine Vorrichtung zur Behandlung von Atemschutzmasken. Es ist eine Aufnahme zur Bestückung mit Atemschutzmasken vorgesehen, bei welcher eine Kopplung der Atemschutzmasken mittels des Atemgeräteanschlusses an die Aufnahme erfolgt. Weiterhin wird beschrieben, dass in einer Kabine der Vorrichtung eine Sammeleinrichtung zur Sammlung von Behandlungsmitteln vorgesehen ist, sowie eine Pumpe für die Zufuhr der Behandlungsmittel.

US 3,881,503 A offenbart eine Vorrichtung zum Waschen und Dekontaminieren von Anästhesie-Ausrüstungsgegenständen. Es ist ein Düsensystem vorgesehen, durch welches unter hohem Druck Wasserstrahlen auf das Reinigungsgut aufgesprüht werden können.

In DE 11 74 169 B wird eine Vorrichtung zur Reinigung von Atemschutzmasken beschrieben. Dabei ist in einem Gehäuse ein drehbargelagertes Rohrgestell vorgesehen, bei welchem die zu reinigenden Masken auf Halterungen aufgespannt werden. Mittels des Drehgestells werden die Atemschutzmasken mit einer Drehbewegung durch ein Bad einer Reinigungsflüssigkeit in einer Wanne hindurch bewegt.

WO 2011/144518 A2 beschreibt eine Reinigungsvorrichtung zur Reinigung von Atemgeräten. Die Reinigungsvorrichtung umfasst mindestens eine Reinigungskammer zur Aufnahme mindestens eines Atemgeräts sowie mindestens eine Fluideinrichtung zur Beaufschlagung des Atemgeräts mit mindestens einem Reinigungsfluid. Die Reinigungsvorrichtung weist weiterhin mindestens eine Druckbeaufschlagungsvorrichtung mit mindestens einem Druckanschluss auf. Der Druckanschluss ist mit mindestens einem gasführenden Element des Atemgeräts verbindbar. Die Druckbeaufschlagungsvorrichtung ist eingerichtet, um das gasführende Element mit Druckgas zu beaufschlagen.

Trotz der mit den bekannten Verfahren und Vorrichtungen zur Reinigung von Atemgeräten erzielten Vorteile verbleiben einige technische Herausforderungen. So stellen insbesondere längere Einsätze wie beispielsweise Großbrände die Einsatzkräfte vor technische und logistische Herausforderungen. Da eine Reinigung vor Ort nur manuell möglich wäre, wird verunreinigte Schutzausrüstung in der Praxis vor Ort gesammelt und zurück zur Einsatzzentrale transportiert, um dort gereinigt zu werden. Die Einsatzkräfte müssen somit vor Ort mit Ersatzgeräten ausgerüstet werden, was die Einsatzkosten und den logistischen Aufwand erhöht. Insbesondere bei größeren Einsätzen und großen Entfernungen zur Einsatzzentrale oder auch zu einer entsprechend ausgerüsteten Atemschutzwerkstatt ist daher im Einsatz oft die persönliche Schutzausrüstung nur in limitierter Stückzahl verfügbar. Zudem ist beispielsweise bei Chemikalienunfällen oder anderen Gefahrstoffeinsätzen der Transport der verschmutzten persönlichen Schutzausrüstung mit der Gefahr einer Verschleppung der Gefahrstoffe und einer Kontamination zusätzlicher Flächen oder Personen verbunden, die dann wiederum ebenfalls einem Reinigungsprozess unterzogen werden müssen.

WO 2013/024455 A1 offenbart eine mobile Tauchbasis umfassend einen Unterbau, der diverse Elemente wie eine Schale, Staufächer, Einhängevorrichtungen oder Tragekästen für die Tauchflaschen, Kompressorschlauchleitungen zum Befüllen der Tauchflaschen, eine drehbare Aufhängestange zum Aufhängen von Neoprenanzügen und Trockenanzügen sowie ein Fließband mit Schläuchen und Sprays zum Waschen der Tauchausrüstung in den Schubladen und ein weiteres Fließband mit Schläuchen und Sprays zum Waschen von Neoprenanzügen, Tauchflaschen und Jackets umfasst. Die Tauchbasis kann ferner eine Rampe oder Zugangstreppe und ein Schutzvordach aufweisen. Insbesondere beschreibt die WO 2013/024455 A1 eine mobile Reinigungseinheit umfassend: mindestens einen Wagen mit mindestens einer Auflagefläche und mindestens einem Fahrwerk; mindestens eine auf dem Wagen montierte Druckgasquelle; und mindestens eine auf dem Wagen montierte Reinigungsvorrichtung zur Reinigung der Atemgeräte. Die Reinigungsvorrichtung umfasst mindestens eine Reinigungskammer zur Aufnahme mindestens eines Atemgeräts, und mindestens eine Fluideinrichtung zur Beaufschlagung des Atemgeräts mit mindestens einer Reinigungsflüssigkeit, wobei die Fluideinrichtung mindestens eine Düse aufweist.

### Technische Zielsetzung

Es wäre daher wünschenswert, eine Vorrichtung und ein Verfahren bereitzustellen, welche die oben beschriebenen Probleme im Umgang mit persönlicher Schutzausrüstung adressieren. Insbesondere sollen Vorrichtungen und Verfahren bereitgestellt werden, welche die Logistik bei Großeinsätzen vereinfachen und welche eine Gefahr einer unkontrollierten Verschleppung von Gefahrstoffen durch den Transport persönlicher Schutzausrüstung vermeiden.

### Offenbarung der Erfindung

Es werden dementsprechend eine mobile Reinigungseinheit und ein Verfahren zur Reinigung von Atemgeräten vorgeschlagen, mit den Merkmalen der unabhängigen Patentansprüche. Vorteilhafte Weiterbildungen, welche einzeln oder in beliebiger und für den Fachmann ersichtlicher Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, das das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt wird eine mobile Reinigungseinheit zur Reinigung und optional auch zur Desinfektion von Atemgeräten vorgeschlagen. Die mobile Reinigungseinheit umfasst:
- mindestens einen Wagen mit mindestens einer Auflagefläche und mindestens einem Fahrwerk;
- mindestens eine auf dem Wagen montierte Druckgasquelle, insbesondere eine Druckluftquelle; und
- mindestens eine auf dem Wagen montierte Reinigungsvorrichtung zur Reinigung der Atemgeräte, wobei die Reinigungsvorrichtung umfasst:
   ∘ mindestens eine Reinigungskammer zur Aufnahme mindestens eines Atemgeräts,
   ∘ mindestens eine Fluideinrichtung zur Beaufschlagung des Atemgeräts mit mindestens einer Reinigungsflüssigkeit, wobei die Fluideinrichtung mindestens eine Düse aufweist,
   ∘ mindestens eine in die Reinigungskammer einbringbare Halterung zur Aufnahme des Atemgeräts, wobei die Halterung eingerichtet ist, um das Atemgerät relativ zu der Fluideinrichtung auszurichten,
   ∘ mindestens eine mit der Druckgasquelle verbindbare Druckbeaufschlagungsvorrichtung mit mindestens einem Druckanschluss, wobei der Druckanschluss mit mindestens einem gasführenden Element des Atemgeräts verbindbar ist, wobei die Druckbeaufschlagungsvorrichtung eingerichtet ist, um das gasführende Element mit Druckgas zu beaufschlagen, während das Atemgerät mit dem Reinigungsfluid beaufschlagt wird.

Der Begriff "Atemgerät", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Vorrichtungen beziehen, welche in irgendeiner Weise zur Bereitstellung von Atemgas an mindestens einen menschlichen und/oder tierischen Benutzer eingerichtet sind. Bei diesen Atemgeräten kann es sich dabei um vollständige, betriebsfertige Atemgeräte handeln, oder auch um Bestandteile derselben, so dass im Folgenden zwischen Atemgeräten und deren Bestandteilen begrifflich nicht unterschieden wird. Insbesondere können die Atemgeräte Atemmasken, Atemschutzmasken, Schläuche, Ventile, Filter, Druckgasbehälter, Lungenautomaten oder Kombinationen der genannten und/oder anderer Elemente umfassen.

Der Begriff "reinigen", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Befreiung von zu reinigendem Gut oder Reinigungsguts von anhaftendem Schmutz oder anderen Verunreinigungen sowie optional auch auf eine keimreduzierende und/oder keimabtötende Wirkung oder sogar desinfizierende Wirkung beziehen.

Der Begriff "Reinigungseinheit", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einheit, also auf eine Vorrichtung oder als Ganze oder gemeinsam handhabbare Gruppe von Vorrichtungen beziehen, welche für die Reinigung von Reinigungsgut eingerichtet ist. Unter einer "mobilen Reinigungseinheit" kann dementsprechend eine Reinigungseinheit verstanden werden, welche mobil ist, insbesondere derart, dass diese von einer einzelnen Person oder zwei Personen bequem und vorzugsweise ohne Zuhilfenahme von Transportmitteln wie Gabelstaplern oder Hubwagen von einem Ort zum anderen gebracht werden kann, beispielsweise gerollt werden kann.

Der Begriff "Wagen", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine fahrbare Aufnahmevorrichtung, insbesondere eine rollbare Aufnahmevorrichtung, zur Aufnahme eines oder mehrerer Gegenstände in mindestens einem Innenraum und/oder auf mindestens einer Auflagefläche beziehen. Insbesondere kann der Wagen als Rollwagen und/oder als Rollcontainer ausgestaltet sein. Der Wagen weist dementsprechend mindestens eine Auflagefläche auf, also eine Fläche, auf welcher zu transportierendes Gut aufgenommen werden kann. Die Auflagefläche kann insbesondere zumindest teilweise eben ausgestaltet sein und kann beispielsweise eine Oberfläche mindestens einer Auflageplatte oder Basisplatte sein, die beispielsweise aus Kunststoff, Holzwerkstoff, Holz oder Metall hergestellt sein kann. Der Wagen kann dementsprechend weiterhin ein Fahrwerk aufweisen, also eine Vorrichtung, mittels derer der Wagen gerollt werden kann, also beispielsweise eine oder mehrere Rollen, Räder, Walzen oder Kugeln. Insbesondere kann der Rollwagen beispielsweise drei oder vier Räder aufweisen, von denen beispielsweise ein Rad oder zwei Räder auch drehbar ausgestaltet sein können. Weiterhin kann das Fahrwerk mindestens eine Feststellbremse aufweisen, mittels derer beispielsweise die Räder oder das Fahrwerk blockiert werden können. Der Rollwagen kann mit einer Vorrichtung ausgestattet sein, die ein Schieben desselben von Hand ermöglicht oder erleichtert, beispielsweise ein bügelartiger Griff.

Der Begriff "Druckgas", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein beliebiges Gas beziehen, welches einen Druck oberhalb des Normaldrucks, also einen Druck oberhalb von 1 bar, aufweist. Insbesondere kann es sich dabei um einen Druck oberhalb von 1,5 bar, insbesondere oberhalb von 2 bar, und besonders bevorzugt oberhalb von 3 bar handeln. Insbesondere kann es sich bei dem Druckgas um Druckluft handeln, auch als Pressluft bezeichnet.

Dementsprechend ist der Begriff "Druckgasquelle", wie er hier verwendet wird, ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Quelle zur Bereitstellung von Druckgas im Sinne der obigen Definition beziehen, beispielsweise Druckluft. Bei der Druckgasquelle kann es sich dementsprechend insbesondere um eine Druckluftquelle handeln, oder die Druckgasquelle kann zumindest eine Druckluftquelle umfassen. Die Druckgasquelle kann insbesondere eine Vorrichtung zur Speicherung von Druckgas umfassen, beispielsweise mindestens eine Druckgasflasche, und/oder mindestens eine Vorrichtung zur Komprimierung von Gas, insbesondere einen Kompressor. Alternativ oder zusätzlich kann die Druckgasquelle jedoch auch mindestens einen externen Druckanschluss zum Anschließen mindestens einer externen Druckgasquelle, beispielsweise einer bauseitigen Druckgasleitung, eines externen Kompressors oder einer externen Druck Gasflasche, aufweisen.

Die Druckgasquelle ist auf dem Wagen montiert. Allgemein soll in diesem oder auch in anderem Zusammenhang unter dem Ausdruck "auf dem Wagen montiert" die Bedeutung verstanden werden, die der Fachmann diesem Begriff beimisst. Der Begriff ist nicht beschränkt auf eine spezielle oder angepasste Bedeutung. Der Begriff kann, ohne Beschränkung, sich insbesondere auf eine beliebige ortsfeste Aufnahme mindestens eines Gegenstands in oder auf dem Wagen beziehen. Dabei kann der auf dem Wagen montierte Gegenstand beispielsweise mittels mindestens einer Fixiervorrichtung mit dem Wagen verbunden sein, beispielsweise lösbar verbunden sein, beispielsweise mittels mindestens eines Fixiergurtes, mindestens einer Verschraubung, mindestens einer Klemme, mindestens einer kraftschlüssigen Fixiervorrichtung, mindestens einer formschlüssigen Fixiervorrichtung oder mittels einer Kombination zweier oder mehrerer dieser Fixiervorrichtungen. Weiterhin kann der Wagen auch mindestens eine Aufnahme aufweisen, in der der zu montierende Gegenstand aufgenommen ist, beispielsweise mindestens ein Fach zur Aufnahme des Gegenstandes, beispielsweise ein verschließbares Abteil, Regalfach oder Containerfach.

Weiterhin ist, wie oben ausgeführt, mindestens eine Reinigungsvorrichtung zur Reinigung der Atemgeräte auf dem Wagen montiert. Unter einer "Reinigungsvorrichtung" soll dabei grundsätzlich die Bedeutung verstanden werden, die der Fachmann diesem Begriff beimisst. Der Begriff ist nicht beschränkt auf eine spezielle oder angepasste Bedeutung. Der Begriff kann, ohne Beschränkung, sich insbesondere auf eine beliebige Vorrichtung beziehen, welche eingerichtet ist, um mindestens ein Reinigungsgut zu reinigen im Sinne der obigen Definition.

Die Reinigungsvorrichtung umfasst mindestens eine Reinigungskammer zur Aufnahme mindestens eines Atemgeräts. Der Begriff "Reinigungskammer", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen von mindestens einer Wand oder mindestens einem Gehäuse teilweise oder vollständig umschlossenen Raum beziehen, in welchem eine Reinigung im Sinne der obigen Definition erfolgen kann. Diese Reinigungskammer kann grundsätzlich als geschlossene, geöffnete oder zu öffnende Reinigungskammer ausgestaltet sein. Besonders bevorzugt ist es, wenn die Reinigungskammer allseitig oder zumindest in zwei Dimensionen von einem Gehäuse umschlossen ist, welches vollständig geschlossen ausgestaltet sein kann, welches jedoch grundsätzlich auch eine oder mehrere Durchführungen und/oder Öffnungen aufweisen kann. Die Reinigungskammer kann insbesondere als starre Reinigungskammer ausgestaltet sein, also als Reinigungskammer, welche während eines Reinigungsvorgangs ihre Position und/oder Ausrichtung nicht verändert, kann jedoch grundsätzlich auch als bewegliche Reinigungskammer ausgestaltet sein, beispielsweise als schwenkbare und/oder drehbare Reinigungskammer, welche während eines Reinigungsvorgangs in der Reinigungsvorrichtung ihre Position und/oder Orientierung verändert, beispielsweise durch eine Drehung, eine Rotation, einen Schleudervorgang, einen Rüttelvorgang oder ähnliche Bewegungen. Insofern kann die Reinigungskammer beispielsweise als Spülkammer einer Spülmaschine ausgestaltet sein und die Reinigungsvorrichtung als Spülmaschine, und/oder die Reinigungskammer kann als Trommel einer Waschmaschine ausgestaltet sein, und die Reinigungsvorrichtung in Form einer Waschmaschine. Beispielsweise können Geschirrspülmaschinen und/oder Wäschewaschmaschinen kommerzieller Art oder für den Haushaltsbereich erfindungsgemäß modifiziert werden. Insbesondere kann es sich jedoch um eine modifizierte Spülmaschine handeln, wie sie üblicherweise für den gewerblichen Einsatz genutzt wird, insbesondere eine Einkammer-Spülmaschine mit genau einer Reinigungskammer, deren Fluideinrichtung zwei separate Systeme aufweist, nämlich ein Spülsystem und ein separates Nachspülsystem mit einem separaten Nachspültank, in dem bereits während des Spülens eine Nachspülflüssigkeit temperiert werden kann.

Die Reinigungsvorrichtung weist weiterhin mindestens eine Fluideinrichtung zur Beaufschlagung des Atemgeräts mit mindestens einem Reinigungsfluid auf. Unter einem "Reinigungsfluid" kann dabei allgemein die gewöhnliche und gängige Bedeutung verstanden werden, die der Fachmann diesem Begriff beimisst. Insbesondere kann unter diesem Begriff eine grundsätzlich beliebige Flüssigkeit verstanden werden, die zur Reinigung des Reinigungsguts, hier insbesondere des Atemgeräts, geeignet ist. Insbesondere kann es sich um eine wässrige Flüssigkeit handeln, beispielsweise Wasser mit oder ohne Zusatz von waschaktiven Substanzen, beispielsweise Detergenzien, Klarspülern oder ähnlichem. Dabei können, wie oben ausgeführt, in der Reinigungsvorrichtung eine oder zwei oder auch mehrere Reinigungsfluide zum Einsatz kommen, beispielsweise eine Spülflüssigkeit und eine Nachspülflüssigkeit. So kann beispielsweise die Spülflüssigkeit Wasser mit Zusatz eines oder mehrerer Reinigerkonzentrate sein, und als Nachspülflüssigkeit kann beispielsweise Frischwasser mit oder ohne Zusatz von Klarspüler verwendet werden.

Der Begriff "Fluideinrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, mittels derer das innerhalb der Reinigungskammer aufgenommene Atemgerät in beliebiger Weise direkt oder indirekt mit dem Reinigungsfluid beaufschlagt werden kann. Dieses Beaufschlagen erfolgt beispielsweise in Form eines direkten Beaufschlagens, durch ein Besprühen, Betropfen, Bestrahlen oder eine Kombination der genannten und/oder anderer direkter Beaufschlagungsarten, bei welchen aus der Fluideinrichtung austretendes Reinigungsfluid insbesondere unmittelbar auf das Atemgerät auftrifft. Diese Ausgestaltung der Beaufschlagung kann insbesondere bei fester Reinigungskammer erfolgen, beispielsweise bei einer Spülmaschine. Alternativ oder zusätzlich kann die Beaufschlagung mittels der Fluideinrichtung auch derart erfolgen, dass die Fluideinrichtung die Reinigungskammer vollständig oder teilweise mit Reinigungsfluid füllt, so dass das in der Reinigungskammer aufgenommene Reinigungsfluid zumindest in einer Stellung der Reinigungskammer mit dem Reinigungsfluid in Kontakt kommt. Diese Ausgestaltung der Beaufschlagung kann insbesondere bei einer Ausgestaltung der Reinigungskammer als bewegliche Reinigungskammer genutzt werden, beispielsweise in Form einer Trommel. Auch Kombinationen der genannten Beaufschlagungsarten und/oder anderer Beaufschlagungsarten sind möglich. Unabhängig davon, ob die Reinigungskammer starr oder beweglich ausgestaltet ist, kann die Beaufschlagung mit dem Reinigungsfluid im einfachen Betrieb erfolgen, indem das Reinigungsfluid lediglich einmal das Atemgerät beaufschlagt. Alternativ oder zusätzlich kann jedoch auch eine Reinigung im Umwälzbetrieb erfolgen, indem Reinigungsfluid mehrfach auf das Atemgerät aufgebracht wird. Derartige Umwälzbetriebe und Umwälzkreisläufe sind beispielsweise aus herkömmlichen Spülmaschinen oder Waschmaschinen bekannt. Insbesondere kann auch ein kombinierter Betrieb in einem Reinigungsprogramm erfolgen, bei welchem das Atemgerät ein- oder mehrmalig im Umwälzbetrieb mit mindestens einer Spülflüssigkeit gespült oder gewaschen wird, gefolgt von mindestens einem Nachspülschritt, in welchem das Atemgerät ohne Umwälzen des Reinigungsfluids einmalig mit einer Nachspülflüssigkeit beaufschlagt wird. Anschließend kann mindestens ein Trocknungsschritt erfolgen. Die Reinigungsvorrichtung kann insbesondere als Programmautomat ausgestaltet sein und kann eine Steuerung aufweisen, welche eingerichtet ist, mindestens ein Reinigungsprogramm durchzuführen.

Die Fluideinrichtung weist mindestens eine Düse auf. Der Begriff "Düse", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, in welcher ein Fluid durch eine Zufuhreinrichtung einer Öffnung zugeführt wird und aus dieser Öffnung austreten kann, beispielsweise in einem oder mehreren Tropfen oder Strahlen. Die Düse kann insbesondere in einem der mehreren Düsenarmen innerhalb der Reinigungskammer aufgenommen sein, beispielsweise in einem oder mehreren drehbaren Düsenarmen. Beispielsweise kann die Reinigungsvorrichtung einen oder mehrere Düsenarme oberhalb der Halterung für die Atemgeräte und eine oder mehrere Düsenarme unterhalb der Halterung für die Atemgeräte aufweisen. Wie oben ausgeführt, kann dabei ein getrenntes Düsensystem für einen Spülvorgang im Umwälzbetrieb und ein Düsensystem für einen Nachspülprozess vorgesehen sein, wobei das Nachspüldüsensystem beispielsweise direkt aus einem separaten Nachspültank gespeist werden kann, das Spüldüsensystem hingegen aus einem am Boden der Reinigungskammer befindlichen Tank. Auch andere Ausgestaltungen sind jedoch möglich.

Die Reinigungsvorrichtung weist mindestens eine in die Reinigungskammer einbringbare Halterung zur Aufnahme des Atemgeräts auf. Der Begriff "Halterung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, welche eingerichtet ist, um ein oder mehrere Elemente aufzunehmen und ortsfest und insbesondere in einer bestimmten Orientierung zu lagern oder zu halten. Insbesondere kann die Halterung mindestens einen Korb aufweisen. Die Halterung kann fest in der Reinigungskammer installiert sein, kann jedoch auch beweglich ausgestaltet sein und/oder kann als herausnehmbare Halterung ausgestaltet werden, welche aus der Reinigungskammer herausgenommen werden kann, vorzugsweise ohne dass hierfür zusätzliches Werkzeug erforderlich wäre. Insbesondere kann die Halterung mindestens einen aus der Reinigungskammer herausnehmbaren Korb aufweisen. Die Halterung ist eingerichtet, um das Atemgerät relativ zu der Fluideinrichtung auszurichten und vorzugsweise zu fixieren. Beispielsweise kann diese Fixierung derart erfolgen, dass das Atemgerät zwar an kritischen Stellen mit Reinigungsfluid beaufschlagt wird, wobei das Reinigungsfluid jedoch nach der Beaufschlagung vorzugsweise aus diesen kritischen Bereichen herausfließen kann, beispielsweise aus konkaven Wölbungen von Atemmasken. Die Halterung kann auch schwenkbar ausgestaltet sein, so dass während verschiedener Schritte eines Reinigungsverfahrens unterschiedliche Stellungen eingenommen werden können. Beispielsweise kann für eine Beaufschlagung mit dem Reinigungsfluid mindestens eine erste Stellung vorgesehen sein, und für ein Entleeren der Atemgeräte mindestens eine zweite Stellung. Die mindestens eine erste Stellung kann auch während des Programms wechseln, so dass eine Beaufschlagung aus mehreren Richtungen erfolgen kann, ohne dass hierfür die Fluideinrichtung, beispielsweise die Düsen, in ihrer Stellung und/oder Ausrichtung verändert werden müssten, was jedoch gleichwohl erfolgen kann. Ein Entleeren kann beispielsweise durch ein Verkippen und/oder Verdrehen der Halterung erfolgen, so dass beispielsweise Atemmasken und/oder Innenbereiche von Schläuchen entleert werden können. Alternativ oder zusätzlich zu einer Halterung zur Fixierung des Atemgeräts ist jedoch grundsätzlich eine nicht-ausgerichtete und/oder nicht-fixierte Aufnahme der Atemgeräte in der Reinigungskammer möglich.

Allgemein kann die Reinigungsvorrichtung dementsprechend eine modifizierte Geschirrspülmaschine und/oder eine modifizierte Wäschewaschmaschine sein oder eine derartige Geschirrspülmaschine oder Wäschewaschmaschine im modifizierten Zustand umfassen. Besonders bevorzugt ist es, wenn die Reinigungsvorrichtung derart eingerichtet ist, dass die Beaufschlagung mit Reinigungsfluid durch Bestrahlen, Besprühen oder Betropfen erfolgt. Insbesondere sollte das Atemgerät während der Beaufschlagung nicht oder zumindest nicht vollständig in das Reinigungsfluid eintauchen, so dass das Reinigungsfluid unmittelbar bei oder unmittelbar nach dem Auftreffen auf das Atemgerät wieder von diesem abfließen und/oder abtropfen kann. Auf diese Weise kann verhindert werden, dass durch eine längere Einwirkung oder sogar durch eine Beaufschlagung des Atemgeräts mit Reinigungsfluid bei Überdruck das Reinigungsfluid in das gasführende Element eindringt, und/oder es kann verhindert werden, dass Rückstände des Reinigungsfluids in dem Atemgerät verbleiben. Beispielsweise ist dies gewährleistet, wenn die Reinigungsvorrichtung als Spülmaschine ausgestaltet ist, bei welcher das Atemgerät in einer Halterung aufgenommen ist und aus mindestens einer Düse, beispielsweise von oberhalb und/oder unterhalb der Halterung, mit Reinigungsfluid beaufschlagt wird, wobei nach der Beaufschlagung das Reinigungsfluid unmittelbar von dem Atemgerät in einen Waschtank abfließen und/oder abtropfen kann.

Die Halterung kann insbesondere derart ausgestaltet sein, dass diese mehrere unterschiedliche Aufnahmen aufweist, die eingerichtet sind, um unterschiedliche Arten von Atemgerät und/oder unterschiedliche Bestandteile des Atemgeräts aufzunehmen. Insbesondere kann die Halterung mehrere Fächer und/oder Aufnahmen umfassen, in denen unterschiedliche Bestandteile eines Atemgeräts aufgenommen werden können und ggf. fixiert und/oder räumlich ausgerichtet werden können, wobei die Bestandteile dennoch einander zugeordnet bleiben, so dass nach der Reinigung die Bestandteile ohne Untermischung wieder einander zugeordnet und zusammengefügt werden können. So kann die Halterung beispielsweise mindestens zwei Halterungsgruppen mit jeweils einer Mehrzahl von Aufnahmen umfassen, wobei jeweils eine Halterungsgruppe einem Atemgerät zugeordnet ist und wobei jeweils eine Halterungsgruppe mehrere unterschiedliche Arten von Aufnahmen zur Aufnahme unterschiedlicher Bestandteile eines Atemgeräts umfasst.

Die Reinigungsvorrichtung weist weiterhin mindestens eine mit der Druckgasquelle verbindbare Druckbeaufschlagungsvorrichtung mit mindestens einem Druckanschluss auf. Der Begriff "Druckbeaufschlagungsvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine seitens der Reinigungsvorrichtung vorgesehene Vorrichtung beziehen, welche eingerichtet ist, um seitens der Reinigungsvorrichtung Druckgas bereitzustellen. Insbesondere kann die Druckbeaufschlagungsvorrichtung mindestens einen Druckgasstutzen und/oder mindestens ein Druckgasventil seitens der Reinigungsvorrichtung umfassen, welches einerseits mit der Druckgasquelle und andererseits mit dem Druckanschluss verbindbar ist. Beispielsweise kann die Druckbeaufschlagungsvorrichtung ein Bauelement der Reinigungsvorrichtung sein, welches beispielsweise durch eine Steuerung der Reinigungsvorrichtung ansteuerbar ist, so dass beispielsweise über mindestens ein Ventil entsprechend in einem oder mehreren Programmschritten Druckgas der Druckgasquelle an dem Druckanschluss bereitgestellt werden kann. Der von der Druckgasquelle bereitgestellte Gasdruck kann dabei unvermindert oder gedrosselt weitergegeben werden. Die Druckbeaufschlagungsvorrichtung kann beispielsweise einen Stutzen zur direkten oder indirekten Verbindung mit der Druckgasquelle aufweisen, beispielsweise einen Gewindestutzen und/oder einen Stutzen mit einem Schnellverschluss. Die Druckbeaufschlagungsvorrichtung weist weiterhin den mindestens einen Druckanschluss zur Verbindung mit dem mindestens einen gasführenden Element des Atemgeräts auf. Dem Begriff "Druckanschluss" die übliche Bedeutung zukommen, welche der Fachmann diesem Begriff beimisst. Insbesondere kann unter einem Druckanschluss grundsätzlich ein beliebiger Anschluss der Druckbeaufschlagungsvorrichtung verstanden werden, über welchen das Druckgas der Druckbeaufschlagungsvorrichtung bereitstellbar ist. Insbesondere kann dieser Druckanschluss im Inneren der Reinigungskammer angeordnet sein und/oder vom Inneren der Reinigungskammer aus zugänglich sein. Auch eine Bereitstellung einer Mehrzahl von Druckanschlüssen ist denkbar. Der Druckanschluss soll mit mindestens einem gasführenden Element des Atemgeräts in der Reinigungskammer, vorzugsweise mit mehreren gasführenden Elementen mehrerer Atemgeräte in der Reinigungskammer, verbindbar sein. Der Begriff "gasführendes Element" ist dabei ein weiter Begriff, dem die übliche Bedeutung beigemessen werden soll, wie der Fachmann sie versteht. Allgemein kann unter diesem Begriff ein Element verstanden werden, welches bei einer Benutzung des Atemgeräts durch einen menschlichen oder tierischen Benutzer mit einem Atemgas beaufschlagt wird oder auf andere Weise mit dem Atemgas in Kontakt kommen kann. Insbesondere kann es sich hierbei um einen Lungenautomaten und/oder einen Atemschlauch mit mindestens einem Ventil handeln. Insbesondere kann es sich bei dem gasführenden Element um ein Element handeln, welches mindestens einen Schlauch und/oder mindestens eine andere Art von Gasführungsvorrichtung mit einem Innenraum und/oder mindestens ein Ventil aufweist, welche in der Regel nicht mit Reinigungsfluid beaufschlagt werden dürfen. Beispielsweise kann es sich bei dem gasführenden Element um einen Bereich des Atemgeräts handeln, welcher im Betrieb mit einem Druck oberhalb des Normaldrucks beaufschlagt wird, beispielsweise einen gasführenden Bereich eines Atemgeräts oberhalb eines Normaldrucks, beispielsweise oberhalb von 1,5 bar, insbesondere oberhalb von 2 bar. Insbesondere kann es sich um einen atemgasführenden Bereich eines Lungenautomaten handeln, wobei es sich bei dem Lungenautomaten grundsätzlich um einen einstufigen oder auch einen mehrstufigen Lungenautomaten handeln kann. Dabei kann das gasführende Element beispielsweise ein Teil einer ersten Stufe und/oder einer zweiten Stufe und/oder gegebenenfalls weiterer Stufen des Lungenautomaten sein oder auch ein vollständiger Lungenautomat. Beispielsweise kann es sich bei dem gasführenden Element um einen Bereich zwischen einem Schlauchanschluss und einem Ventil eines Lungenautomaten handeln, oder das gasführende Element kann einen derartigen Bereich umfassen.

Unter einer Verbindung zwischen dem Druckanschluss und dem gasführenden Element kann insbesondere eine fluidische Verbindung verstanden werden, insbesondere eine Gasverbindung, so dass das Druckgas der Druckbeaufschlagungsvorrichtung in das gasführende Element des Atemgeräts, insbesondere in einen Innenraum des gasführenden Elements, überführt werden kann, vorzugsweise ohne dass bei dieser Verbindung eine Leckage und/oder ein Druckverlust auftritt. Darüber hinaus kann optional die Verbindung zwischen dem Druckanschluss und dem gasführenden Element des Atemgeräts mindestens eine mechanische Verbindung umfassen, insbesondere eine formschlüssige und/oder kraftschlüssige Verbindung, so dass das Atemgerät fest mit dem Druckanschluss verbunden werden kann. Beispielsweise kann es sich hierbei um eine Schraubverbindung und/oder eine Klemmverbindung und/oder eine Spannverbindung handeln, wozu der Druckanschluss und/oder das Atemgerät jeweils mindestens ein mechanisches Verbindungselement aufweisen können. Insbesondere kann es sich hierbei um eine Steckverbindung in Form einer Schnellkupplung und/oder um ein Gewinde handeln, beispielsweise ein Kupplungsstück für einen Atemanschluss eines Lungenautomaten. Unter einer Schnellkupplung ist dabei allgemein eine gasdichte und/oder flüssigkeitsdichte Steckverbindung zwischen zwei fluidführenden Bauelementen zu verstehen, welche durch eine auf einfache und schnelle Weise herzustellende und zu lösende mechanische Fixierung, insbesondere ohne Verwendung eines Schraubverschlusses, mechanisch gesichert werden kann, beispielsweise durch mindestens einen Spannhaken und/oder einen Bajonettverschluss und/oder einen Schraubverschluss, beispielsweise eine Überwurfmutter. Die Verbindung kann insbesondere ohne Werkzeug herstellbar sein.

Insbesondere kann der Druckanschluss eine Mehrzahl von fest oder austauschbar ausgestalteten Adaptern zur Verbindung mit unterschiedlichen Arten gasführender Elemente umfassen. Mittels dieser Adapter können eine Mehrzahl unterschiedlicher gasführender Elemente direkt oder indirekt mit dem Druckanschluss verbindbar sein, beispielsweise unterschiedliche Arten und/oder unterschiedliche Typen gasführender Elemente, beispielsweise unterschiedlicher Fabrikate oder Hersteller. Beispielsweise kann ein Adaptersatz mit einer Mehrzahl unterschiedlicher Kupplungsstücke (beispielsweise Kupplungsstücke einer Schnellkupplung) und/oder Gewinde zum Anschluss unterschiedlicher gasführender Elemente vorgesehen sein. Beispielsweise kann es sich hierbei um unterschiedliche Schnellkupplungssysteme und/oder Normgewinde handeln. Alternativ oder zusätzlich kann der mindestens eine Druckanschluss jedoch auch als fester Druckanschluss für einen bestimmten Typ von Verbindungselement bzw. für einen bestimmten Typ von gasführendem Element ausgestaltet sein. Besonders vorteilhaft ist es, wenn der Druckanschluss und/oder das Kupplungssystem so eingerichtet sind, dass einerseits kein Gas austreten kann wenn kein Gegenstück angeschlossen ist, und dass in diesem Fall auch kein anderes Medium, beispielsweise Reinigungsfluid, in das gasführende Element eintreten kann.

Die Druckbeaufschlagungsvorrichtung ist eingerichtet, um das gasführende Element während der Beaufschlagung mit dem Reinigungsfluid mit Druckgas zu beaufschlagen. Besonders bevorzugt ist die Druckbeaufschlagungsvorrichtung derart eingerichtet, dass die Druckbeaufschlagung mit dem Druckgas derart erfolgt, dass sämtliches Reinigungsfluid aus einem mit dem Druckgas beaufschlagten Innenraum des Atemgeräts ferngehalten wird. Die Reinigungsvorrichtung kann insbesondere derart ausgestaltet sein, dass die Druckbeaufschlagung über die Druckbeaufschlagungsvorrichtung während mindestens eines Reinigungsvorgangs erfolgt, beispielsweise während mindestens eines Programmschritts eines einschrittigen oder mehrschrittigen Reinigungsprogramms. Insbesondere kann die Beaufschlagung mit dem Druckgas gleichzeitig zur Beaufschlagung des Atemgeräts mit dem Reinigungsfluid erfolgen. Der Druckanschluss kann dementsprechend insbesondere innerhalb der Reinigungskammer angeordnet sein, so dass die gleichzeitige Beaufschlagung mit Druckgas und Reinigungsfluid erfolgen kann.

Die Druckbeaufschlagungsvorrichtung ist, wie oben ausgeführt, mit der Druckgasquelle verbindbar, insbesondere verbunden. Diese Verbindung kann dauerhaft oder auch lösbar ausgestaltet sein. Die Verbindung kann beispielsweise durch mindestens einen Druckgasschlauch hergestellt sein. Beispielsweise kann dieser mindestens eine Druckgasschlauch zwischen mindestens einer Druckgasflasche und/oder mindestens einem Kompressor der Druckgasquelle und der Druckbeaufschlagungsvorrichtung vorgesehen sein. Der Druckgasschlauch kann beispielsweise beidseitig entsprechende Verbindungselemente, insbesondere entsprechende Gewinde und/oder Schnellverschlüsse, aufweisen.

Der Wagen kann insbesondere mindestens ein Schubgestell mit mindestens einem Griff aufweisen, insbesondere einer Schubstange. So kann der Wagen beispielsweise eine sich waagerecht erstreckende Auflagefläche aufweisen sowie ein sich senkrecht an einem Ende von der Auflagefläche nach oben erstreckendes Schubgestell, beispielsweise mit einer horizontalen Querstange als Griff. Der Griff kann insbesondere mit einer Bremse ausgestattet sein, beispielsweise einer Bremse, welche direkt oder indirekt auf das Fahrwerk einwirken kann. Insbesondere kann der Griff mindestens eine Totmannbremse aufweisen, also eine Bremse, welche automatisch betätigt wird, wenn ein Benutzer den Griff loslässt.

Weiterhin ist es vorteilhaft, wenn die mobile Reinigungseinheit ein Ausblasen des Atemgeräts mit Druckgas ermöglicht. Dementsprechend kann die mobile Reinigungseinheit beispielsweise weiterhin mindestens eine mit der Druckgasquelle verbindbare, insbesondere verbundene, Druckgaspistole zum Ausblasen der Atemgeräte aufweisen, insbesondere eine Druckluftpistole. Diese kann beispielsweise über einen Druckgasschlauch beweglich handhabbar sein und kann beispielsweise an einer Halterung der mobilen Reinigungseinheit aufgehängt werden, wenn die Druckgaspistole nicht benötigt wird.

Die Druckgasquelle kann insbesondere mindestens ein Element umfassen, ausgewählt aus der Gruppe bestehend aus: einer Druckgasflasche; einem Kompressor; einem Druckgasstutzen zum Anschließen einer externen Druckquelle. Die Druckgasquelle kann, wie oben ausgeführt, insbesondere lösbar auf dem Wagen montiert sein, beispielsweise durch entsprechende Aufnahmen und/oder Fixierelemente wie beispielsweise ein oder mehrere Fächer und/oder Spanngurte.

Die mobile Reinigungseinheit kann weiterhin mindestens einen auf dem Wagen montierten Abwassertank umfassen. Der Abwassertank kann grundsätzlich ein beliebiger Tank sein, beispielsweise ein aus Edelstahl und/oder Kunststoff hergestellter Container für Flüssigkeiten, mit mindestens einer Öffnung, welche vorzugsweise verschließbar ist. Der Abwassertank kann beispielsweise eine für mindestens einen Reinigungsvorgang ausreichende Menge an Abwasser aufnehmen, beispielsweise mindestens 5 1 oder mindestens 10 1. Der Abwassertank kann insbesondere mit mindestens einem Abfluss der Reinigungsvorrichtung verbunden sein. Der Abwassertank kann insbesondere lösbar auf dem Wagen montiert sein, beispielsweise durch mindestens ein Fixierelement und/oder durch mindestens ein Aufnahmefach zur Aufnahme des Abwassertanks. Der Abwassertank kann weiterhin mindestens eine Abflussöffnung zur Entsorgung der darin befindlichen Flüssigkeiten aufweisen. Zwischen dem Abwassertank und dem Abfluss der Reinigungsvorrichtung kann beispielsweise eine permanente oder auch eine lösbare Verbindung bestehen, beispielsweise eine Schlauchverbindung.

Die mobile Reinigungseinheit kann weiterhin mindestens eine auf dem Wagen montierte Frischwasseraufbereitungsanlage zur Aufbereitung von Frischwasser aufweisen. Die Frischwasseraufbereitungsanlage kann insbesondere direkt oder indirekt mit mindestens einem Zulauf der Reinigungsvorrichtung verbunden sein. So kann es vor Ort im Einsatz beispielsweise erforderlich sein, Frischwasser von niedriger Qualität zunächst zu filtern und/oder von bestimmten Verunreinigungen und/oder Salzen vollständig oder teilweise zu befreien. Unter einer "Frischwasseraufbereitungsanlage" kann dementsprechend allgemein die Bedeutung verstanden werden, welche der Fachmann diesem Begriff beimisst. Insbesondere kann die Frischwasseraufbereitungsanlage eine Vorrichtung sein oder umfassen, welche eingerichtet ist, um mindestens eine störende Komponente und/oder Verunreinigung aus zugeführtem Frischwasser zu entfernen. Insbesondere kann die Frischwasseraufbereitungsanlage mindestens eine Vorrichtung umfassen, ausgewählt aus der Gruppe bestehend aus: einer Umkehrosmoseanlage; einem Ionentauscher; einem Frischwasserfilter.

Entsprechend kann es auch erforderlich sein, vor Ort Abwasser zu entsorgen, wobei sichergestellt werden sollte, dass keine Verunreinigungen aus der Reinigungsvorrichtung in die Umwelt und das Grundwasser gelangen, sofern entsprechend des Einsatzes mit Umweltgiften zu rechnen ist. Der oben beschriebene Abwassertank stellt hierzu eine Möglichkeit dar, wobei jedoch der Abtransport von Abwasser zu einer Entsorgungsstelle entsprechend mit logistischem Aufwand verbunden sein kann. Alternativ oder zusätzlich zu einem Abwassertank kann die mobile Reinigungseinheit dementsprechend weiterhin mindestens eine auf dem Wagen montierte Abwasseraufbereitungsanlage aufweisen. Unter einer "Abwasseraufbereitungsanlage" kann dementsprechend allgemein die Bedeutung verstanden werden, welche der Fachmann diesem Begriff beimisst. Insbesondere kann die Abwasseraufbereitungsanlage eine Vorrichtung sein oder umfassen, welche mindestens einen unerwünschten Inhaltsstoff aus dem Abwasser entfernt. Dementsprechend kann die Abwasseraufbereitungsanlage beispielsweise mindestens ein Element umfassen, ausgewählt aus der Gruppe bestehend aus einem Filter und einer Umkehrosmoseanlage. Auch andere Ausgestaltungen sind möglich. Die Abwasseraufbereitungsanlage kann mit dem mindestens einen Abfluss der Reinigungsvorrichtung verbindbar, insbesondere verbunden, sein. Sind sowohl ein Abwassertank als auch eine Abwasseraufbereitungsanlage vorgesehen, so kann beispielsweise ein schaltbares Ventil vorgesehen sein, mittels dessen eine Auswahl getroffen werden kann, ob Abwasser aus dem Abfluss in die Abwasseraufbereitungsanlage oder in den Abwassertank entsorgt wird. Auch eine Kombination ist möglich.

Weiterhin steht im Einsatz nicht immer Frischwasser in ausreichender Menge und/oder Qualität zur Verfügung. Dementsprechend kann die mobile Reinigungseinheit beispielsweise weiterhin mindestens einen auf dem Wagen montierten Frischwassertank umfassen. Der Frischwassertank kann grundsätzlich einen beliebigen Container, beispielsweise hergestellt aus Kunststoff und/oder Metall, insbesondere Edelstahl, zur Aufnahme einer ausreichenden Menge an Frischwasser für mindestens einen Reinigungsvorgang aufweisen, beispielsweise einer Menge von mindestens 5 1 oder insbesondere mindestens 10 1. Der Frischwassertank kann mit mindestens einem Zulauf der Reinigungsvorrichtung verbindbar, insbesondere verbunden, sein. Wiederum kann beispielsweise mindestens ein schaltbares Ventil vorgesehen sein, mittels dessen, automatisch oder manuell, wählbar sein kann, ob Frischwasser aus einer externen Frischwasserquelle, gegebenenfalls nach Aufbereitung durch die Frischwasseraufbereitungsanlage, oder aus dem Frischwassertank an die Reinigungsvorrichtung bereitgestellt wird. Der Frischwassertank kann auch in Kombination mit anderen Elementen eingesetzt werden, beispielsweise in Kombination mit einer Frischwasseraufbereitungsanlage, welche beispielsweise ebenfalls in der mobilen Reinigungseinheit umfasst sein kann. Alternativ kann der Frischwassertank jedoch auch direkt an die Reinigungsvorrichtung angeschlossen sein.

Wie oben bereits ausgeführt, kann der Wagen beispielsweise ein oder mehrere Fächer zur Aufnahme von Elementen der mobilen Reinigungseinheit und/oder von Zubehör aufweisen. Dementsprechend kann die mobile Reinigungseinheit beispielsweise mindestens ein auf dem Wagen montiertes Schrankelement zur Aufnahme von Reinigungsutensilien aufweisen. Weiterhin kann das Schrankelement beispielsweise auch eingerichtet sein, um eine oder mehrere der oben genannten Elemente aufzunehmen, beispielsweise eines oder mehrere der Elemente, ausgewählt aus der Gruppe bestehend aus: dem Abwassertank, dem Frischwassertank, der Frischwasseraufbereitungsanlage, der Abwasseraufbereitungsanlage, der Druckgasquelle, einem Stromaggregat, einem Akkumulator. Die Fächer können beispielsweise durch entsprechende Türen verschließbar sein oder auch lediglich als offene Regale ausgestaltet sein, wobei vorzugsweise in letzterem Fall eine Fixierung für die darin aufgenommene Elemente anderweitig bereitgestellt wird, beispielsweise durch entsprechende Spanngurte oder ähnliche Fixierelemente.

Die mobile Reinigungseinheit kann weiterhin mindestens eine auf dem Wagen montierte Arbeitsplatte aufweisen. Beispielsweise kann diese Arbeitsplatte durch mindestens eine Oberfläche des mindestens einen Schrankelements bereitgestellt oder gebildet werden. Insbesondere kann die Arbeitsplatte aus unempfindlichem Material hergestellt sein, beispielsweise Edelstahl.

Weiterhin ist im Einsatz nicht immer eine entsprechende Stromquelle zum Betrieb der Reinigungsvorrichtung und/oder anderer Komponenten der mobilen Reinigungseinheit verfügbar. Dementsprechend kann die mobile Reinigungseinheit weiterhin mindestens ein auf dem Wagen montiertes Stromaggregat aufweisen. Beispielsweise kann es sich hierbei um einen kraftstoffbetriebenen Generator handeln. Auch dieser kann beispielsweise in mindestens einem Fach des Wagens, beispielsweise des Rollcontainers, aufgenommen oder aufnehmbar sein oder kann auch separat angeordnet sein. Weiterhin kann die mobile Reinigungseinheit auch beispielsweise mindestens einen Stromverteiler aufweisen, welcher beispielsweise mit einem externen Anschluss verbindbar sein kann und welcher entsprechende Stromanschlüsse für Komponenten der mobilen Reinigungseinheit, beispielsweise die Reinigungsvorrichtung und/oder weitere Komponenten, bereitstellen kann. Dabei kann auch beispielsweise eine Stromtransformation erfolgen, so dass beispielsweise die mobile Reinigungseinheit auch beispielsweise mindestens einen Transformator und/oder mindestens einen Stromwandler umfassen kann.

Die mobile Reinigungseinheit kann weiterhin auch mindestens eine Abwasser-Hebeanlage aufweisen. Der Begriff "Abwasser-Hebeanlage", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf beziehen auf eine Anlage, welche eingerichtet ist, um Abwasser, dass unter einer Rückstauebene anfällt, ohne Rückstau abzuleiten und/oder um Abwasser auf ein höher liegendes Niveau anzuheben, insbesondere zu pumpen. Die Abwasser-Hebeanlage kann insbesondere automatisch arbeiten. Die Abwasser-Hebeanlage kann fest oder lösbar mit dem Wagen verbunden sein.

Die mobile Reinigungseinheit kann weiterhin mindestens einen Frischwasseranschluss umfassen, beispielsweise mindestens einen Zulaufstutzen, welcher einen oder mehrere Verbraucher der mobilen Reinigungseinheit mit Frischwasser versorgen kann, insbesondere die Reinigungsvorrichtung. Der Zulaufstutzen kann beispielsweise mindestens ein entsprechendes Gewinde aufweisen. Der Zulaufstutzen kann beispielsweise auch mindestens einen Verteiler aufweisen, um mehrere Verbraucher zu versorgen, beispielsweise über ein oder mehrere Ventile.

Die mobile Reinigungseinheit kann weiterhin mindestens einen auf dem Wagen montierten Abwasseranschluss umfassen, wobei der Abwasseranschluss mit mindestens einem Abfluss der Reinigungsvorrichtung verbunden ist. Der Abwasseranschluss kann beispielsweise mit mindestens einem externen Abfluss verbindbar ausgestaltet sein.

Die mobile Reinigungseinheit kann weiterhin mindestens ein auf dem Wagen montiertes Spülbecken aufweisen. Insbesondere kann dieses Spülbecken in einer Arbeitsfläche integriert sein. Das Spülbecken und/oder die mobile Reinigungseinheit können weiterhin mindestens eine auf dem Wagen montierte Handbrause aufweisen, insbesondere eine ausziehbare Handbrause.

Die mobile Reinigungseinheit kann insbesondere derart ausgestaltet sein, dass diese in einer genormten Weise gestapelt und/oder angeordnet werden kann. Beispielsweise kann dies für den Transport in einem Gerätewagen und/oder in einem Transportcontainer von Vorteil sein. Dementsprechend kann der Wagen beispielsweise ein Grundmaß einer genormten Transportpalette aufweise, insbesondere ein Grundmaß ausgewählt aus: 800 mm × 600 mm; 1200 mm × 800 mm; 1200 mm × 1000 mm; 1200 mm × 900 mm; 1140 mm × 1140 mm. Auch Vielfache eines Grundmaßes oder andere Normmaße sind jedoch grundsätzlich möglich.

Die Beaufschlagung des Atemgeräts mit der mindestens einen Reinigungsflüssigkeit in der Reinigungsvorrichtung kann insbesondere in Form eines direkten Beaufschlagens erfolgen, wobei aus der Fluideinrichtung austretendes Reinigungsfluid unmittelbar auf das Atemgerät auftrifft. Die Beaufschlagung kann dabei insbesondere ausgewählt sein aus einem Besprühen, Betropfen, Bestrahlen oder eine Kombination der genannten Beaufschlagungsarten.

Wie oben ausgeführt, kann der Druckanschluss insbesondere ein Verbindungselement umfassen. Das Verbindungselement kann, neben einer Druckverbindung, weiterhin auch eingerichtet sein, um zusätzlich mindestens eine mechanische Verbindung mit dem Atemgerät herzustellen. Das Verbindungselement kann insbesondere ausgewählt sein aus der Gruppe bestehend aus einem formschlüssigen Verbindungselement und einem kraftschlüssigen Verbindungselement. Der Druckanschluss kann insbesondere eine Mehrzahl unterschiedlicher Adapter zur Verbindung mit unterschiedlichen Arten gasführender Elemente aufweisen.

Die Halterung kann insbesondere eine herausnehmbare Halterung sein. Der Druckanschluss kann insbesondere zumindest teilweise in die Halterung integriert sein. Diese Integration kann beispielsweise starr oder auch flexibel erfolgen. So kann der Druckanschluss beispielsweise starr mit der Halterung verbunden sein oder auch beispielsweise in Form eines Schlauchs mit der Halterung verbunden sein. Der Schlauch kann beispielsweise einen freien Stutzen aufweisen, welcher beispielsweise in der Halterung liegt, so dass beispielsweise ein Lungenautomat auch mit einer lose in der Halterung, beispielsweise einem Korb, liegenden Kupplung verbunden werden kann. Die Halterung kann insbesondere eine lösbare Druckgasverbindung zur übrigen Reinigungsvorrichtung aufweisen. So kann beispielsweise mindestens eine Schlauchverbindung vorgesehen sein, um die Halterung mit mindestens einem Druckstutzen und/oder mit einem anderen Element der Druckbeaufschlagungsvorrichtung zu verbinden, welches beispielsweise fest im Inneren der Reinigungskammer integriert ist. Beispielsweise kann die Halterung einen aus der Reinigungskammer herausnehmen Korb umfassen, wobei der Druckanschluss in die Halterung integriert ist und mit anderen Bestandteilen der Druckbeaufschlagungsvorrichtung, welche fest in der Reinigungskammer integriert sind, über mindestens einen Druckgasschlauch verbunden ist. Wird der Korb in die Reinigungskammer eingesetzt, wird die Verbindung geschlossen, und umgekehrt, wenn der Korb aus der Reinigungskammer herausgenommen wird, wird die Verbindung geöffnet. Beispielsweise kann der Druckgasschlauch einen oder mehrere Schnellverschlüsse aufweisen. Auch andere Arten einer Druckverbindung zwischen dem Druckanschluss und anderen Bestandteilen der Druckbeaufschlagungsvorrichtung sind möglich.

Wie oben ausgeführt, kann die Reinigungsvorrichtung insbesondere eine Einkammerspülmaschine umfassen oder ganz oder teilweise als Einkammerspülmaschine ausgestaltet sein. Die Einkammerspülmaschine kann insbesondere mindestens einen separat von der Reinigungskammer ausgebildeten Fluidtank aufweisen, insbesondere einen Nachspültank, wobei in dem Fluidtank mindestens ein Reinigungsfluid unabhängig von einem in der Reinigungsvorrichtung ablaufenden Reinigungsprozess konditionierbar, insbesondere erwärmbar, ist.

Die Reinigungsvorrichtung kann insbesondere eingerichtet sein, um ein Reinigungsprogramm mit mindestens zwei unterschiedlichen Programmschritten durchzuführen. Dementsprechend kann die Reinigungsvorrichtung insbesondere ganz oder teilweise als Programmautomat ausgestaltet sein.

Die Reinigungsvorrichtung kann auf verschiedene Weisen vorteilhaft weitergebildet werden. So kann, wie oben ausgeführt, der Druckanschluss mindestens ein formschlüssiges und/oder kraftschlüssiges Verbindungselement umfassen, um zusätzlich eine mechanische Verbindung mit dem Atemgerät herzustellen. Hierbei kann es sich insbesondere um ein Schnellkupplungssystem und/oder ein Gewinde handeln. Alternativ oder zusätzlich sind auch andere mechanische Verbindungselemente einsetzbar.

Das Reinigungsfluid kann, wie oben ausgeführt, insbesondere mindestens ein wässriges Reinigungsfluid umfassen, also Wasser oder Wasser mit Zusatz von einem oder mehreren Zusätzen, welche in gelöster Form, in Emulsionsform oder auch in Suspensionsform vorliegen können. Alternativ oder zusätzlich kann das Reinigungsfluid auch mindestens eine Reinigerlösung umfassen. Unter einer Reinigerlösung ist dabei allgemein eine Lösung mindestens eines Tensids in mindestens einem Lösungsmittel, beispielsweise ebenfalls Wasser, zu verstehen. Beispielsweise kann es sich hierbei um eine kommerzielle Reinigerlösung handeln, welche auch für Geschirrspülmaschinen eingesetzt werden kann und/oder welche in Waschmaschinen eingesetzt werden kann. Auch spezielle Reinigerlösungen können jedoch grundsätzlich entwickelt und/oder eingesetzt werden. Wiederum alternativ oder zusätzlich kann das Reinigungsfluid auch ein Reinigungsfluid mit mindestens einem Klarspüler umfassen, also einem Zusatz, welcher ein Abtrocknen des Atemgeräts erleichtert und/oder ein Abperlen von Flüssigkeit von mindestens einer Oberfläche des Atemgeräts erleichtert. Derartige Klarspüler, welche ebenfalls ein oder mehrere Tenside umfassen können, sind aus dem Bereich der Geschirrspültechnik grundsätzlich bekannt. Wiederum alternativ oder zusätzlich kann das Reinigungsfluid auch mindestens ein Nachspülfluid umfassen, welches grundsätzlich beispielsweise Wasser sein kann und/oder Wasser mit einem oder mehreren Zusätzen. Wiederum alternativ oder zusätzlich kann das Reinigungsfluid auch ein Reinigungsfluid mit mindestens einem Desinfektionsmittel umfassen, wobei unter einem Desinfektionsmittel grundsätzlich eine beliebige Substanz verstanden werden kann, welche eine keimabtötende Wirkung aufweist. Derartige Desinfektionsmittel sind aus dem Stand der Technik ebenfalls grundsätzlich bekannt. Wiederum alternativ oder zusätzlich kann das Reinigungsfluid auch demineralisiertes Wasser umfassen. Wie unten noch näher ausgeführt wird, kann das demineralisierte Wasser beispielsweise in einer entsprechenden Demineralisierungsvorrichtung der Reinigungsvorrichtung bereitgestellt werden, beispielsweise einem Ionentauscher. Alternativ oder zusätzlich kann die Demineralisierungsvorrichtung jedoch auch beispielsweise eine Umkehrosmoseeinrichtung umfassen. Wiederum alternativ oder zusätzlich kann das Reinigungsfluid auch ein erwärmtes Reinigungsfluid umfassen. Insbesondere zum Nachspülen können sich derartige erwärmte Reinigungsfluide eignen, wobei unter erwärmten Reinigungsfluiden grundsätzlich Reinigungsfluide zu verstehen sind, welche eine Temperatur von mindestens 25 °C aufweisen. Besonders bevorzugt sind Temperaturen von 30 °C bis 70 °C und insbesondere 60 °C. Diese Temperaturen haben sich insbesondere für die Reinigung von flexiblen Elastomerwerkstoffen, wie sie für Atemgeräte häufig eingesetzt werden, als geeignet erwiesen.

Wie oben dargestellt, können zum Zwecke der vorliegenden Erfindung insbesondere kommerziell erhältliche Wäschewaschmaschinen und/oder Geschirrspülmaschinen umgestaltet werden, beispielsweise gewerbliche Wäschewaschmaschinen und/oder gewerbliche Geschirrspülmaschinen. Diese Umgestaltung kann derart erfolgen, dass die Wäschewaschmaschinen bzw. Geschirrspülmaschinen mit einer Druckbeaufschlagungsvorrichtung gemäß den oben beschriebenen Merkmalen ausgestattet werden. Die Reinigungsvorrichtung kann beispielsweise als Frontladerspülmaschine oder als Haubenspülmaschine ausgestaltet sein. Unter einer Frontladerspülmaschine ist dabei eine Spülmaschine mit einer Reinigungskammer zu verstehen, welche durch eine Klappe und/oder einen Schieber durch einen vor der Spülmaschine angeordneten Benutzer geöffnet werden kann. Unter einer Haubenspülmaschine ist dabei eine Spülmaschine zu verstehen, deren Reinigungskammer eine aufschwenkbare und/oder auffahrbare Haube umfasst, welche von sonstigen Bestandteilen der Reinigungskammer, beispielsweise einer Basis, getrennt werden kann. Derartige Haubenspülmaschinen sind grundsätzlich aus dem Bereich der gewerblichen Geschirrspültechnik bekannt. Die Reinigungskammer kann insbesondere starr ausgestaltet sein. Die Reinigungskammer kann allgemein während des Reinigungsvorgangs verriegelbar ausgestaltet sein, insbesondere indem eine automatische Verriegelung vorgesehen ist, welche vorzugsweise während eines Programms ausgelöst wird und nach einem Programm automatisch wieder gelöst werden kann. Aufgrund der besonderen Kompaktheit bieten sich im Rahmen der vorgeschlagenen mobilen Reinigungseinheit insbesondere Frontladerspülmaschinen an.

In einem weiteren Aspekt wird die Verwendung der vorgeschlagenen mobilen Reinigungseinheit in einer oder mehreren der beschriebenen Ausgestaltungen zur Reinigung mindestens eines Atemgeräts vorgeschlagen. Das Atemgerät kann insbesondere ausgewählt sein aus der Gruppe bestehend aus: einem Lungenautomaten für Taucher; einer Atemmaske für Taucher; einem Lungenautomaten für Rettungskräfte, insbesondere Feuerwehr; einer Atemschutzmaske für Rettungskräfte; einem Pressluftatmer; einem Lungenautomaten für Polizei; einem Lungenautomaten für Streitkräfte; einer Atemmaske für Polizei; einer Atemmaske für Streitkräfte; einem Lungenautomaten für medizinische Zwecke; einer Atemmaske für medizinische Zwecke.

In einem weiteren Aspekt wird ein Verfahren zur Reinigung eines Atemgeräts vorgeschlagen, beispielsweise eines oder mehrerer der vorgenannten Atemgeräte. Das Verfahren umfasst die Verwendung der vorgeschlagenen mobilen Reinigungseinheit in einer oder mehreren der beschriebenen Ausgestaltungen. Dabei wird vorzugsweise das Atemgerät mit dem mindestens einem Reinigungsfluid beaufschlagt, wobei während der Beaufschlagung mit dem Reinigungsfluid vorzugsweise mindestens ein gasführendes Element des Atemgeräts mit dem Druckgas beaufschlagt wird.

Die vorgeschlagene mobile Reinigungseinheit und das vorgeschlagene Verfahren weisen gegenüber bekannten Vorrichtungen und Verfahren der genannten Art zahlreiche Vorteile auf. Insbesondere lässt sich die mobile Reinigungseinheit gestalten wie ein Spülmobil für die mobile Geschirrspülung. Die Reinigungsvorrichtung kann beispielsweise auf einem Wagen, insbesondere einem Rollcontainer und/oder einem Handwagen, insbesondere einem Handwagen mit Totmannbremse, aufgenommen sein, vorzugsweise gemeinsam mit anderen Funktionsbaugruppen. Neben der Druckgasquelle können zu diesen weiteren Funktionsbaugruppen beispielsweise eine oder mehrere der folgenden Funktionsbaugruppen gehören: ein Frischwasser-Anschluss; ein Abwasseranschluss; eine Wasseraufbereitungsanlage zur Speisung der Spülmaschine, beispielsweise ein Ionenaustauscher und/oder eine Umkehrosmoseanlage; ein Handwaschbecken, vorzugsweise mit ausziehbarer Brause; ein Schrankteil zur Aufbewahrung von Reinigungschemie und anderem Zubehör; eine Arbeitsplatte; ein Stromaggregat, beispielsweise mit einer Spannung von 400 V; eine Abwasser-Hebeanlage; ein Frischwassertank; ein Abwassertank; ein Luftkompressor zum Ausblasen und/oder Vortrocknen der gereinigten Gegenstände. Auch Kombinationen der genannten Baugruppen und/oder anderer der oben beschriebenen Komponenten lassen sich leicht und einfach integrieren.

Der Umfang der mobilen Reinigungseinheit kann je nach Anforderungen frei gestaltet und kombiniert werden. Die mobile Reinigungseinheit kann so gestaltet sein, dass sie zu den vorhandenen Systemen beispielsweise in Feuerwehrfahrzeugen passt und dort austauschbar zu anderen mobilen Ausrüstungsträgern oder Ausrüstungsgegenständen eingesetzt werden kann, beispielsweise in Gerätewagen oder in Abrollcontainern der Feuerwehrfahrzeuge.

Die gesamte mobile Reinigungseinheit kann sowohl an Anschlüsse vor Ort angeschlossen werden, beispielsweise um temporäre Übergangslösungen zu schaffen, als auch vollkommen autark betrieben werden, je nach Ausstattung. Auf diese Weise lässt sich mit der mobilen Reinigungseinheit direkt am Einsatzort eine temporäre Atemschutzwerkstatt mit maschineller Aufbereitung der verschmutzten Teile der persönlichen Schutzausrüstung errichten.

Eine entsprechende mobile Reinigungseinheit kann auf kleinstem Raum standardisiert angeboten werden. Hierdurch kann eine Unabhängigkeit von festen baulichen Einrichtungen gewährleistet werden. So ist eine maschinelle Aufbereitung der Teile der persönlichen Schutzausrüstung auch vor Ort möglich, ohne zusätzlichen Transportaufwand der verschmutzten Teile.

Die mobile Reinigungseinheit lässt sich insbesondere vorteilhaft einsetzen bei länger andauernden Einsätzen mit hohem Personalaufwand und/oder bei Einsätzen in entlegenen Gebieten wie beispielsweise bei Großeinsätzen in ländlichen Regionen oder bei Waldbränden. Die mobile Reinigungseinheit kann auch vorteilhaft eingesetzt werden bei Militäreinsätzen oder Feuerwehreinsätzen in unerschlossenen Gebieten. Die mobile Reinigungseinheit kann mit umfangreicher zusätzlicher Ausstattung versehen werden und kann optional sogar derart ausgestaltet sein, dass diese vollständig autark und ohne externe Bereitstellung von Energie und Medien wie beispielsweise Wasser betrieben werden kann.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine Schnittdarstellung einer Reinigungsvorrichtung zum Einsatz in einer mobilen Reinigungseinheit;
- Figur 2: eine Detaildarstellung einer bestückten Halterung der Reinigungsvorrichtung gemäß Figur 1;
- Figuren 3A und 3B: einen Wagen zum Einsatz in der mobilen Reinigungseinheit in einer Rückansicht (Fig. 3A) und einer Seitenansicht (Fig. 3B);
- Figur 3C: einen Abrollcontainer für den Feuerwehreinsatz, mit einer Mehrzahl von Wagen nach den Figuren 3A und 3B; und
- Figur 4: ein Ausführungsbeispiel einer mobilen Reinigungseinheit zur Reinigung von Atemgeräten.

### Beschreibung der Ausführungsbeispiele

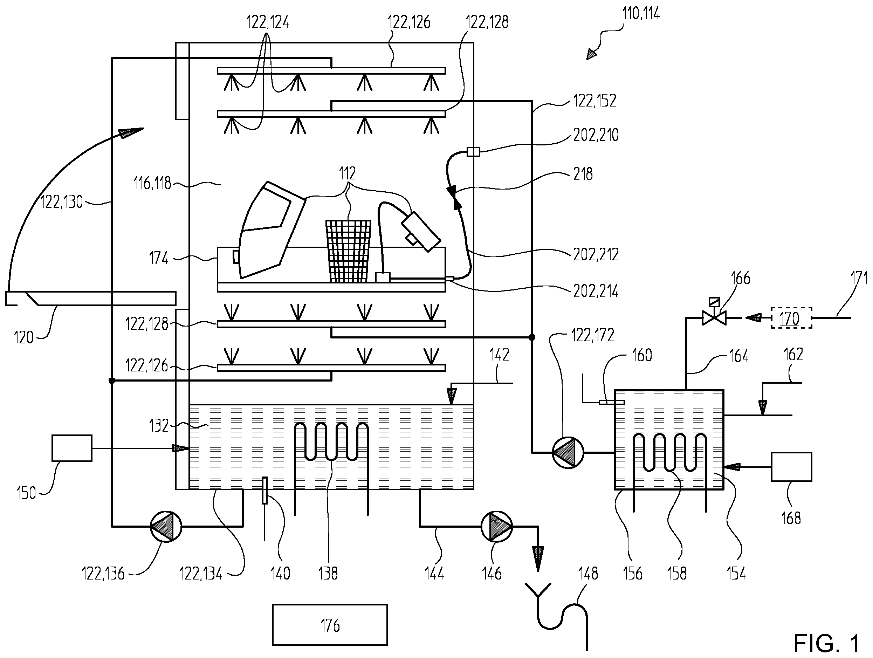

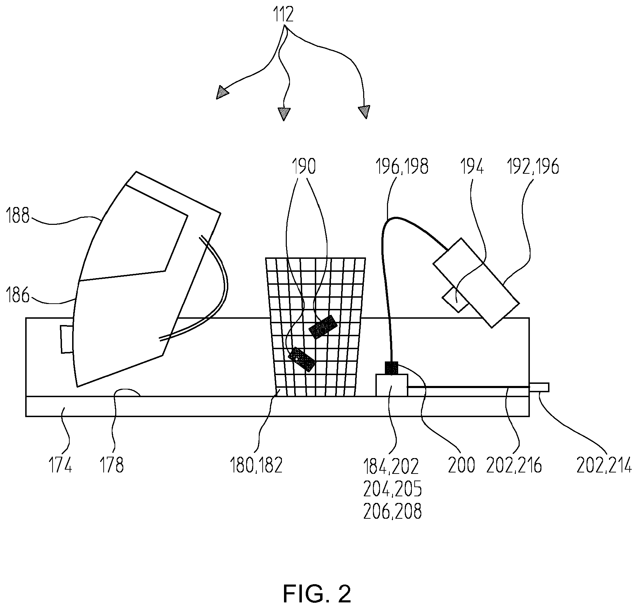

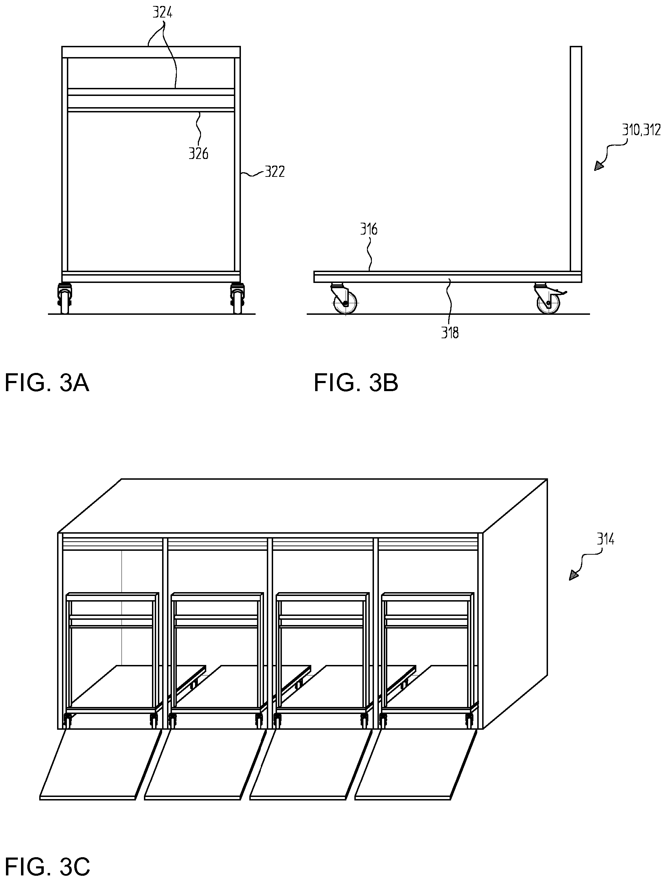

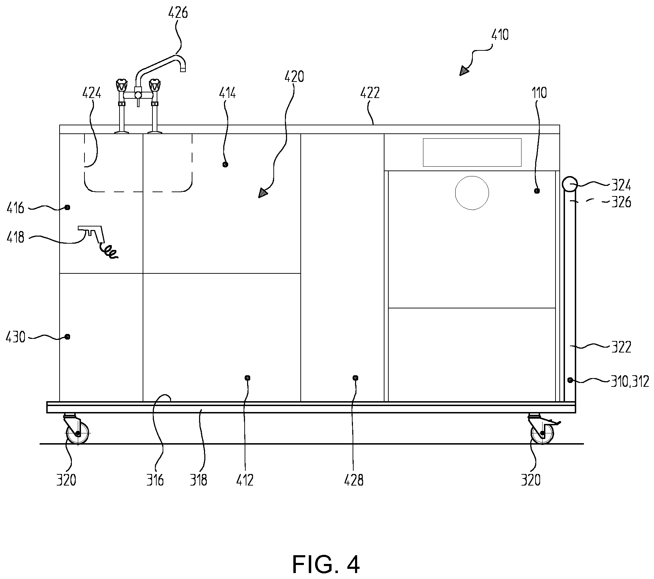

In den Figuren 1-3 sind verschiedene Komponenten eines Ausführungsbeispiels einer mobilen Reinigungseinheit 410 dargestellt, welche in Figur 4 in einem Ausführungsbeispiel in Gesamtheit in Seitenansicht gezeigt ist. Dabei zeigen die Figuren 1 und 2 eine Reinigungsvorrichtung 110. Die Figuren 3A und 3B zeigen einen Wagen 310 in Form eines Rollwagens 312 in einer Rückansicht (Figur 3A) und einer Seitenansicht (Figur 3B). Figur 3C zeigt eine Mehrzahl von Wagen 310 gemäß den Figuren 3A und 3B in einem Abrollcontainer 314 für den Feuerwehreinsatz, in perspektivischer Darstellung. Figur 4 zeigt schließlich die mit den verschiedenen Komponenten bestückte mobile Reinigungseinheit 410 in einer Seitenansicht. Im Folgenden werden diese Figuren gemeinsam erläutert.

Die mobile Reinigungseinheit 410, welche in Figur 4 in Seitenansicht dargestellt ist, umfasst einen in den Figuren 3A und 3B dargestellten Wagen 310, welcher in diesem Ausführungsbeispiel exemplarisch als Rollwagen 312 ausgestaltet ist oder einen derartigen Rollwagen 312 umfasst. Beispielsweise kann es sich um einen normierten Rollcontainer handeln, welcher vom Grundmaß und vorzugsweise auch von anderen Abmessungen her in einem Feuerwehrwagen, einen Gerätewagen oder, wie in Figur 3C dargestellt, einem Abrollcontainer 314 für Feuerwehreinsätze aufgenommen werden kann. Der Wagen 310 umfasst mindestens eine Auflagefläche 316, beispielsweise als Oberfläche einer Basisplatte 318, sowie ein Fahrwerk 320. Weiterhin kann der Wagen 310 mindestens einen Griff 324 und vorzugsweise mindestens eine Bremse 326, beispielsweise eine Totmannbremse, aufweisen. Als mögliches Ausführungsbeispiel eines derartigen Wagens 310 kann beispielsweise auf Universal-Rollcontainer der Günzburger Steigtechnik GmbH, 89312 Günzburg, Deutschland, verwiesen werden. Auch andere Wagen, Rollwagen oder Rollcontainer sind jedoch grundsätzlich einsetzbar. Insbesondere können auch vollständig oder teilweise geschlossene Rollcontainer zum Einsatz kommen.

Auf dem Wagen 310 sind, wie unten noch näher ausgeführt wird, verschiedene Elemente der mobilen Reinigungseinheit 410 fest oder lösbar montiert. Insbesondere umfasst die mobile Reinigungseinheit 110, wie in Figur 4 erkennbar, mindestens eine Reinigungsvorrichtung 110 sowie mindestens eine Druckgasquelle 416. Weitere Einzelheiten werden unten noch näher beschrieben.

In Figur 1 ist ein Ausführungsbeispiel der Reinigungsvorrichtung 110 dargestellt, welche zur Reinigung eines oder mehrerer Atemgeräte 112 eingerichtet ist und welche in der mobilen Reinigungseinheit 410 eingesetzt werden kann, beispielsweise gemäß Figur 4. Die Reinigungsvorrichtung 110 ist in Figur 1 in einer Schnittdarstellung schematisch gezeigt. Die Reinigungsvorrichtung 110 kann beispielsweise als Spülmaschine 114 ausgestaltet sein, wobei beispielsweise gewerbliche Geschirrspülmaschinen entsprechend umgerüstet werden können, beispielsweise Untertisch-Spülmaschinen der Meiko Maschinenbau GmbH & Co. KG, 77652, Offenburg. Die Reinigungsvorrichtung 110 umfasst eine Reinigungskammer 116, beispielsweise eine Spülkammer 118. Diese Reinigungskammer 116 kann beispielsweise durch eine Tür 120, beispielsweise eine Schwenktür, eine Schiebetür oder eine Klappe, und/oder durch eine andere Öffnungsvorrichtung geöffnet werden. Alternativ oder zusätzlich kann die Reinigungskammer 116 auch als durch eine Haube abgedeckte Reinigungskammer ausgestaltet sein. In dem in Figur 1 dargestellten Ausführungsbeispiel ist die Spülmaschine 114 beispielsweise als Frontlader-Spülmaschine ausgestaltet. Auch andere Ausgestaltungen sind jedoch möglich.

Die Reinigungsvorrichtung 110 weist mindestens eine Fluideinrichtung 122 zur Beaufschlagung der in der Reinigungskammer 116 aufgenommenen Atemgeräte 112 mit einem oder mehreren Reinigungsfluiden auf. Beispielsweise kann die Fluideinrichtung 122 eine oder mehrere Düsen 124 umfassen, welche beispielsweise oberhalb und/oder unterhalb der Atemgeräte 112 und/oder an anderen Orten innerhalb der Reinigungskammer 116 angeordnet sein können, beispielsweise an einer oder mehreren Seitenwänden. Beispielsweise kann die Fluideinrichtung 122, wie in dem dargestellten Ausführungsbeispiel gemäß Figur 1, ein Waschdüsensystem 126, auch als Spüldüsensystem bezeichnet, umfassen, beispielsweise mit einem oder mehreren unterhalb und/oder oberhalb der Atemgeräte 112 aufgenommenen, vorzugsweise drehbar und/oder schwenkbar gelagerten Düsenarmen mit mehreren Düsen 124. Alternativ oder zusätzlich kann die Fluideinrichtung 122 auch ein Nachspüldüsensystem 128 umfassen, beispielsweise mit einem oder mehreren Nachspüldüsenarmen, welche vorzugsweise wiederum drehbar und/oder schwenkbar gelagert sind, welche beispielsweise wiederum oberhalb und/oder unterhalb der Atemgeräte 112 angeordnet sein können. Auch andere Anordnungen und/oder Ausgestaltungen sind jedoch grundsätzlich möglich.

Die Fluideinrichtung 122 kann darüber hinaus ein oder mehrere weitere Elemente umfassen, wie beispielsweise eine oder mehrere Rohrleitungen, eine oder mehrere Pumpen und/oder ein oder mehrere Tanks. So ist beispielsweise in dem dargestellten Ausführungsbeispiel mindestens ein Waschleitungssystem 130 vorgesehen, zur Beaufschlagung des Waschdüsensystems 126 mit Reinigungsfluid 132, beispielsweise Reinigerlösung, aus einem oder mehreren Waschtanks 134. Beispielsweise kann ein Waschtank 134 im Bodenbereich der Reinigungskammer 116 vorgesehen sein und/oder auf andere Weise mit der Reinigungskammer 116 verbunden sein, so dass Reinigungsfluid 132 nach Beaufschlagung der Atemgeräte 112 wieder zurück in den Waschtank 134 fließen und/oder tropfen kann. Zur Beaufschlagung des Waschdüsensystems 126 mit dem Reinigungsfluid 132 aus dem Waschtank 134 kann die Fluideinrichtung 122 weiterhin eine oder mehrere Umwälzpumpen 136 aufweisen. Weiterhin können ein oder mehrere Heizelemente 138 vorgesehen sein, um das Reinigungsfluid 132 des Waschtanks 134 und/oder anderer Tanks zu erwärmen, beispielsweise in Form einer Waschtankheizung innerhalb des Waschtanks 134. Zur Kontrolle der Aufheizung des Reinigungsfluids 132 können ein oder mehrere Temperatursensoren 140 vorgesehen sein, beispielsweise innerhalb des Waschtanks 134. Weiterhin können ein oder mehrere Niveausensoren 142 vorgesehen sein, beispielsweise ein Niveausensor 142 als Niveausensor des Waschtanks 134.

Der Waschtank 134 kann beispielsweise über eine Ablaufleitung 144 und optional über eine Ablaufpumpe 146 in einen Abfluss 148 entleerbar sein. Der Abfluss 148 kann beispielsweise mit einem Abwassertank 412 der mobilen Reinigungseinheit 410 verbunden sein, der beispielsweise in Figur 4 dargestellt ist und welcher beispielsweise auf dem Wagen 310 aufgenommen ist. Alternativ oder zusätzlich kann auch ein Ablauf in einen bauseitigen Abfluss erfolgen. Beide Möglichkeiten sind auch kombiniert einsetzbar, einschließlich der Option einer Umschaltung zwischen beiden Möglichkeiten, beispielsweise wenn ein Abwassertank seine Kapazitätsgrenze erreicht hat. Weiterhin kann die mobile Reinigungseinheit 410, wie oben ausgeführt, eine Abwasser-Hebeanlage aufweisen, welche hier nicht dargestellt ist, beispielsweise um Abwasser-Niveau Unterschiede auszugleichen. Beispielsweise kann diesbezüglich auf Hebeanlagen der SFA Sanibroy GmbH in 63128 Dietzenbach, Deutschland, verwiesen werden.

Optional können auch ein oder mehrere, in Figur 1 nicht dargestellte, Zuläufe zu dem Waschtank 134 vorgesehen sein, um diesen mit Reinigungsfluid 132 zu befüllen. Diese können optional bauseitig versorgt werden und/oder mit einem Frischwassertank 414 verbunden sein, der beispielsweise in Figur 4 gezeigt ist. Alternativ oder zusätzlich kann eine Befüllung jedoch auch über das nachfolgend noch näher beschriebene Nachspüldüsensystem 128 erfolgen, beispielsweise über einen Frischwasserzulauf 171. Der Frischwasserzulauf 171 kann beispielsweise mit einem Frischwassertank 414 der mobilen Reinigungseinheit 410 verbunden sein, optional über die unten noch näher beschriebene Umkehrosmoseeinrichtung 170.

Weiterhin kann ein Dosiersystem 150 vorgesehen sein, beispielsweise mindestens ein Dosiersystem, um ein oder mehrere Zusätze in das Reinigungsfluid 132 des Waschtanks 134 einzubringen, beispielsweise ein Reinigerkonzentrat, ein Klarspülmittel, ein Desinfektionsmittel oder Kombinationen der genannten und/oder anderer Zusätze. Vorratsbehälter für das Dosiersystem 150 können beispielsweise ebenfalls auf dem Wagen 310 aufgenommen sein.

Das Reinigungsfluid 132 kann insbesondere in einem Umwälzbetrieb auf die Atemgeräte 112 aufgebracht werden, indem das Reinigungsfluid 132 aus dem Waschtank 134 über das Spüldüsensystem oder Waschdüsensystem 126 auf die Atemgeräte 112 aufgesprüht und/oder aufgespritzt wird, um dann wieder in den Waschtank 134 abzulaufen oder abzutropfen, um von dort aus erneut verwendet zu werden. Optional können ein oder mehrere Filter, beispielsweise Grobfilter und/oder Feinfilter, vorgesehen sein, um das Reinigungsfluid 132 des Waschtanks 134 zumindest teilweise aufzureinigen.

Das Nachspüldüsensystem 128 kann beispielsweise über mindestens ein Nachspülleitungssystem 152 mit einem weiteren Reinigungsfluid 154, beispielsweise einer Nachspülflüssigkeit, beaufschlagt werden. Dabei ist in Figur 1 eine optionale Ausgestaltung gezeigt, bei welcher die Reinigungsvorrichtung 110 als Zweikreissystem ausgestaltet ist. Dementsprechend wird das zweite Reinigungsfluid 154 beispielsweise aus einem separaten Tank bereitgestellt, welcher in dem dargestellten Ausführungsbeispiel als Nachspültank 156 ausgestaltet ist, der getrennt von dem Waschtank 134 ausgebildet ist. Beispielsweise kann dieser Nachspültank 156 als Boiler ausgestaltet sein und kann beispielsweise eine Nachspültankheizung 158 umfassen. Alternativ oder zusätzlich zu einer Nachspültankheizung 158 können auch andere Arten von Heizelementen für das zweite Reinigungsfluid 154 vorgesehen sein, beispielsweise ein oder mehrere Durchlauferhitzer. Selbiges gilt auch für das erste Reinigungsfluid 132 in dem Waschtank 134. Wiederum können in dem Nachspültank 156 ein oder mehrere Temperatursensoren 160 und/oder ein oder mehrere Niveausensoren 162 vorgesehen sein, und der Nachspültank 156 kann über einen oder mehrere Zuläufe 164 mit Reinigungsfluid 154 beschickt werden, beispielsweise Frischwasser. Der mindestens eine Zulauf 164 kann ein oder mehrere Ventile 166 aufweisen. Beispielsweise kann der Zulauf 164 über den Frischwasserzulauf 171 mit einem bauseitigen Frischwasseranschluss verbunden oder verbindbar sein oder kann, optional, wie oben ausgeführt, direkt oder indirekt mit dem Frischwassertank 414 verbunden sein. Auch eine Kombination der genannten Möglichkeiten, einschließlich der Option einer Umschaltung zwischen beiden Optionen, kann gegeben sein. Alternativ oder zusätzlich kann, bauseitig, als Bestandteil der Reinigungsvorrichtung 110 oder als Bestandteil der mobilen Reinigungseinheit 410, mindestens eine Umkehrosmoseeinrichtung 170 vorgesehen sein, über welche der Nachspültank 156 und/oder ein oder mehrere andere Tanks der Reinigungsvorrichtung 110 mit einem Permeat, beispielsweise aufgereinigtem Wasser, beaufschlagt werden können. Weiterhin kann wiederum mindestens ein Dosiersystem 168 vorgesehen sein, über welches ein oder mehrere Zusätze zu dem Reinigungsfluid 154 in dem Nachspültank 156 beigemischt werden können, beispielsweise ein oder mehrere Klarspülerkonzentrate.

Die Beaufschlagung des Nachspüldüsensystems 128 kann vorzugsweise im einfachen Betrieb erfolgen, also nicht im Umwälzbetrieb, so dass das Nachspülfluid aus dem Nachspültank 154 das Atemgerät 112 lediglich einmal beaufschlagt. Zur Beaufschlagung kann die Fluideinrichtung 122 beispielsweise ein oder mehrere Drucksteigerungspumpen 172 umfassen.

Die Reinigung der Atemgeräte 112 in der Reinigungsvorrichtung 110 gemäß Figur 1 kann beispielsweise dadurch erfolgen, dass zunächst ein oder mehrere Atemgeräte 112 mittels einer geeigneten Halterung 174, welche unten noch näher erläutert wird, in die Reinigungskammer 116 eingebracht werden. Anschließend kann die Tür 120 verschlossen werden, und es kann vorzugsweise ein Reinigungsprogramm gestartet werden, welches beispielsweise über eine Steuerung 176, beispielsweise eine zentrale Maschinensteuerung oder eine dezentrale Steuerung, gesteuert werden kann. Dabei kann beispielsweise zunächst der Waschtank 136 mittels des Nachspüldüsensystems 128 mit Reinigungsfluid 132 und/oder einer Vorstufe dieses Reinigungsfluids 132 befüllt werden, beispielsweise Frischwasser, insbesondere demineralisiertem Frischwasser. Dieses kann dann innerhalb des Waschtanks 134 konditioniert werden, beispielsweise durch Beimengung von einem oder mehreren Zusätzen über das Dosiersystem 150 und/oder durch Erwärmung mittels des Heizelements 138. Alternativ oder zusätzlich kann das Reinigungsfluid 132 auch nach einem Klarspülprogramm eines vorangehenden Reinigungszyklus im Waschtank 134 verblieben sein, um in einem sich anschließenden Reinigungszyklus als Reinigungsfluid 132 und/oder als Bestandteil desselben genutzt werden, da Nachspülfluid in der Regel auch nach Beaufschlagung des Atemgeräts 112 einen vergleichsweise hohen Reinheitsgrad aufweist.

Anschließend kann das Atemgerät 112, vorzugsweise im Umwälzbetrieb, in einem oder mehreren Waschprogrammschritten gereinigt, insbesondere gewaschen, werden. Hierbei können anhaftende Verunreinigungen von den Atemgeräten 112 entfernt werden, und/oder es kann eine Hygienisierung der Atemgeräte 112 erfolgen.

Anschließend an den mindestens einen Waschprogrammschritt können vorzugsweise ein oder mehrere Nachspülschritte durchgeführt werden. Hierzu kann der Waschtank 134 über die Ablaufleitung 144 und die Ablaufpumpe 146 optional entleert werden. Bereits während des mindestens einen Waschprogrammschritts kann der Nachspültank 156 mit dem Nachspülfluid 154, beispielsweise Frischwasser mit oder ohne Zusätze, befüllt worden sein, beispielsweise demineralisiertem Frischwasser. Anschließend können eine oder mehrere Zusätze über das Dosiersystem 150 beigemischt werden und/oder es kann eine Erwärmung des Reinigungsfluids 154 als Nachspülfluid mittels der Nachspültankheizung 158 und/oder eines Durchlauferhitzers erfolgen. Das derart vorkonditionierte Nachspülfluid 154 kann dann in dem mindestens einen Nachspülschritt über das Nachspüldüsensystem 128 auf die Atemgeräte 112 aufgebracht werden, so dass diese nachgespült und/oder klargespült werden. Nach dem mindestens einen Nachspülschritt kann sich optional wiederum mindestens ein Trocknungsschritt anschließen, welcher passiv ausgestaltet werden kann, durch einfaches Abwarten, oder welcher auch aktiv unterstützt werden kann, beispielsweise über mindestens ein Trocknungsgebläse und/oder eine andere Art von Trocknungsvorrichtung der Reinigungsvorrichtung 110, beispielsweise ein Infrarotstrahlersystem und/oder ein Mikrowellenstrahlungssystem. Verschiedene Ausgestaltungen sind denkbar. Anschließend an den optionalen Trocknungsschritt kann die bis dahin optional vorzugsweise verriegelte Tür 120 automatisch freigegeben und/oder geöffnet werden. Der gesamte Programmablauf kann beispielsweise durch die Steuerung 176 gesteuert werden, wobei auch mehrere Programmabläufe wählbar sein können.

Es wird darauf hingewiesen, dass das in Figur 1 dargestellte Ausführungsbeispiel der Reinigungsvorrichtung 110 lediglich eines von mehreren verschiedenen Ausführungsbeispielen darstellt. So können einzelne oder mehrere oder auch alle der oben beschriebenen Elemente auch in anderem Rahmen umgesetzt sein. Die Spülkammer 118 kann, alternativ oder zusätzlich zu der starren, ortsfesten Ausgestaltung gemäß Figur 1, auch schwenkbar und/oder drehbar ausgestaltet werden. Weiterhin kann auch der dargestellte Fluidkreislauf erheblich modifiziert werden.

Wie oben dargestellt, wird das mindestens eine Atemgerät 112 innerhalb der Reinigungsvorrichtung 110 vorzugsweise mittels mindestens einer Halterung 174 gehaltert. Eine derartige Halterung 174 ist in vergrößerter Darstellung in Figur 2 in einer Schnittdarstellung exemplarisch gezeigt. Die Halterung 174 kann beispielsweise aus Kunststoff und/oder Metall hergestellt sein und kann beispielsweise, wie in Figur 2 gezeigt, als Korb ausgestaltet werden. Die Halterung 174 kann eine oder mehrere Auflageflächen 178 und/oder ein oder mehrere Halteelemente 180 umfassen, beispielsweise einen oder mehrere Körbe 182 und/oder ein oder mehrere Verbindungselemente 184 für eine mechanische Verbindung mit dem Atemgerät 112 und/oder dessen Fixierung. Dementsprechend kann die Halterung 174 beispielsweise ausgestaltet sein, um eine oder mehrere Komponenten des Atemgeräts 112 relativ zu einer oder mehreren der Düsen 124 auszurichten und/oder zu fixieren. So kann das Atemgerät 112 beispielsweise mindestens eine Atemmaske 186 umfassen, wobei die Ausrichtung durch die Auflagefläche 178 beispielsweise derart erfolgen kann, dass stets eine Sichtscheibe 188 dem oberen Düsensystem zuweist, wohingegen die Innenseite der Atemmaske 186 nach unten weist, so dass über die unteren Düsen eintretendes Reinigungsfluid 132, 154 nach der Beaufschlagung wieder ablaufen kann, ohne dass Reste innerhalb der Atemmaske 186 verbleiben. Der Korb 182 kann beispielsweise eingerichtet sein, um Zubehör 190, welches ebenfalls Bestandteil des Atemgeräts 112 sein kann, aufzunehmen, beispielsweise um eine Zuordnung zu anderen Komponenten des Atemgeräts 112 während des Reinigungsvorgangs aufrechtzuerhalten. Auf diese Weise kann beispielsweise gewährleistet werden, dass unterschiedliche Arten von Atemgeräten 112 gereinigt werden können, ohne dass inkompatible Zubehörteile vermischt werden. Weiterhin kann das Atemgerät 112 beispielsweise einen oder mehrere Lungenautomaten 192 und/oder eine oder mehrere Stufen derartiger Lungenautomaten 192 umfassen. Derartige Lungenautomaten 192 umfassen in der Regel in ihrem Inneren ein oder mehrere Ventile 194, beispielsweise Membran- und/oder Kipphebelventile, über welche ein oder mehrere gasführende Elemente 196 von einem Außenraum abgetrennt sind. Beispielsweise können gasführende Elemente 196 im Inneren einer oder mehrerer Gasleitungen 198 des Lungenautomaten 192, vorgesehen sein, wobei die Innenwände der Gasleitung 198 in der Regel nicht mit Reinigungsfluid 132, 154 in Kontakt kommen dürfen. Die Gasleitung 198 kann beispielsweise in einem oder mehreren Anschlüssen 200 enden, beispielsweise in einer oder mehreren Schnellkupplungen.

Um zu verhindern, dass das mindestens eine gasführende Element 196 der Atemgeräte 112, beispielsweise die Gasleitung 198 des Lungenautomaten 192, mit Reinigungsfluid 132, 154 in Kontakt kommt, wird vorgesehen, dieses gasführende Element 196 mit Druckgas zu beaufschlagen, beispielsweise während eines oder mehrere Programmschritte, in denen das Atemgerät 112 mit dem Reinigungsfluid 132, 154 beaufschlagt wird. Zu diesem Zweck weist die Reinigungsvorrichtung 110 in diesem oder auch in anderen Ausführungsbeispielen, mindestens eine Druckbeaufschlagungsvorrichtung 202 auf. Diese Druckbeaufschlagungsvorrichtung 202 ist eingerichtet, um das mindestens eine gasführende Element 196 mit Druckgas zu beaufschlagen. Zu diesem Zweck weist die Druckbeaufschlagungsvorrichtung 202 mindestens einen Druckanschluss 204 auf, welcher mit dem gasführenden Element 196 derart verbindbar ist, dass eine derartige Gasbeaufschlagung erfolgen kann.

Dieser Druckanschluss 204 ist in dem dargestellten Ausführungsbeispiel exemplarisch als Bestandteil der Halterung 174 ausgebildet. Alternativ oder zusätzlich kann der Druckanschluss 204 jedoch auch an anderen Stellen der Reinigungsvorrichtung 110 vorgesehen sein, vorzugsweise im Inneren der Reinigungskammer 116. Der Druckanschluss 204 kann beispielsweise in dem dargestellten Ausführungsbeispiel als Anschluss 206 für den Lungenautomaten 192 ausgestaltet sein. Der Druckanschluss 204 kann dabei allgemein in diesem oder auch in anderen Ausführungsbeispielen derart ausgestaltet sein, dass dieser an mehrere Arten gasführender Elemente 196, beispielsweise an unterschiedliche Typen und/oder unterschiedliche Arten gasführender Elemente 196, anschließbar ist. Beispielsweise kann der Druckanschluss 204 eine Mehrzahl von Adaptern 205 umfassen und/oder die Reinigungsvorrichtung 110 kann mit einem Adaptersatz mit mehreren Adaptern 205 verschiedener Druckanschlüsse 204 geliefert werden, so dass eine hohe Flexibilität hinsichtlich der Art der gasführenden Elemente 196 besteht. Beispielsweise kann der Anschluss 206 für den Lungenautomaten 192 eine Schnellkupplung umfassen, welche zu dem Anschluss 200 der Gasleitung 198 korrespondiert und mit dieser vorzugsweise druckdicht verbindbar ist. In diesem oder auch in anderen Fällen kann der Druckanschluss 204 somit auch mindestens ein Verbindungselement 208 umfassen und/oder als Verbindungselement 208 zur Herstellung einer mechanischen Verbindung mit dem Atemgerät 112 und insbesondere dem gasführenden Element 196 ausgestaltet sein.

Zur Beaufschlagung des Druckanschlusses 204 und des gasführenden Elements 196 mit Druckgas, beispielsweise Druckluft, können die Reinigungsvorrichtung 110 und/oder die mobile Reinigungseinheit 410 in dem dargestellten Ausführungsbeispiel oder auch in anderen Ausgestaltungen mindestens eine interne und/oder mindestens eine externe Druckgasquelle 416 umfassen, wie in Figur 4 gezeigt. Beispielsweise kann eine Druckgasquelle 416 auf dem Wagen 310 angeordnet sein. Diese Druckgasquelle 416 kann beispielsweise mindestens einen Kompressor und/oder mindestens eine Druckgasflasche umfassen. Alternativ oder zusätzlich kann die Reinigungsvorrichtung 110, wie in Figur 1 dargestellt, auch über mindestens einen externen Druckanschluss 210 ausgestattet sein, um über diesen externen Druckanschluss 210 mit mindestens einer externen Druckgasquelle verbunden zu sein, beispielsweise einer externen Druckgasflasche und/oder einer externen Druckgasleitung, welche beispielsweise gebäudeseitig oder an einem Gerätewagen oder anderen Feuerwehrwagen vorgesehen sein kann. Der externe Druckanschluss 210 und/oder die interne Druckgasquelle 416 können beispielsweise über mindestens eine Druckgasleitung 212 mit dem Druckanschluss 204 verbunden sein. Ist der Druckanschluss 204 mit einer Halterung 174 verbunden, wie in den Figuren 1 und 2 dargestellt, so kann die Druckgasleitung 212 beispielsweise lösbar mit der Halterung 174 und/oder dem Druckanschluss 204 verbunden sein, um optional ein reversibles Herausnehmen der Halterung 174 aus der Reinigungsvorrichtung 110 zu ermöglichen. Beispielsweise können zu diesem Zweck eine oder mehrere Kupplungen 214 vorgesehen sein, welche beispielsweise wiederum über eine oder mehrere Druckgasleitungen 216 mit dem Druckanschluss 204 verbunden sein können. Auch ein Verteilersystem kann innerhalb oder außerhalb der Halterung 174 vorgesehen sein, beispielsweise um mittels einer Druckgasleitung 212 eine Mehrzahl von Druckanschlüssen 204 mit Druckgas beaufschlagen zu können. Wiederum können auch eine oder mehrere Adapter 205 vorgesehen sein, beispielsweise um eine Anpassung auf eine Mehrzahl unterschiedlicher Arten von gasführenden Elementen 196 und/oder Atemgeräten 112 zu ermöglichen. Die Druckbeaufschlagungsvorrichtung 202 kann an einer oder mehreren Stellen trennbar ausgestaltet sein, beispielsweise um die Halterung 174 aus der Reinigungskammer 116 entfernen und beispielsweise bestücken zu können. Zu diesem Zweck kann beispielsweise die Kupplung 214 lösbar ausgestaltet sein. Weiterhin kann die Druckbeaufschlagungsvorrichtung 202 in diesem oder auch in anderen Ausführungsbeispielen der Reinigungsvorrichtung 110 optional ein oder mehrere Ventile 218 umfassen, beispielsweise steuerbare Ventile, beispielsweise (wie in Figur 1 dargestellt) in der Druckgasleitung 212 und/oder in oder vorgeschaltet zu dem externen Druckanschluss 210. Diese Ventile 218 können beispielsweise durch die Steuerung 176 gesteuert werden. So kann beispielsweise auf diese oder auch auf andere Weise die Druckbeaufschlagung des mindestens einen gasführenden Elements 196 mittels der Druckbeaufschlagungsvorrichtung 202 in diesem oder auch in anderen Ausführungsbeispielen der Erfindung gesteuert erfolgen, beispielsweise indem die Druckbeaufschlagung gezielt vor Beginn einer Beaufschlagung der Atemgeräte 112 mit Reinigungsfluid 132, 154 erfolgt. Alternativ oder zusätzlich kann die Druckbeaufschlagung auch lediglich in einem oder mehreren Programmschritten erfolgen, beispielsweise lediglich in einem oder mehreren Programmschritten während einer Beaufschlagung der Atemgeräte 112 mit Reinigungsfluid 132, 154. Optional kann die Beaufschlagung mit Druckgas, beispielsweise Druckluft, während anderer Programmschritte hingegen abgeschaltet werden und/oder in anderer Form erfolgen, beispielsweise mit verändertem Druck. Auf diese Weise kann die Druckbeaufschlagung beispielsweise den verschiedenen Programmschritten angepasst werden.

Die in Figur 4 gezeigte mobile Reinigungseinheit 410 kann neben den oben genannten Elementen weitere Elemente umfassen. Insbesondere kann die mobile Reinigungseinheit mindestens eine mit der Druckgasquelle 416 verbundene Druckgaspistole 418 aufweisen. Weiterhin können beispielsweise ein Schrankelement 420 und/oder eine Arbeitsplatte 422 vorgesehen sein. Zudem kann auf dem Wagen 310 beispielsweise ein Spülbecken 424 vorgesehen sein, vorzugsweise mit mindestens einer Handbrause 426, die beispielsweise als ausziehbare Handbrause ausgestaltet sein kann.

In dem Schrankelement 420 können beispielsweise Reinigungsmittel 428 und/oder andere Utensilien aufbewahrt werden. Weiterhin können ein oder mehrere der oben genannten Elemente der mobilen Reinigungseinheit 410 ganz oder teilweise in dem Schrankelement 420 aufgenommen sein. Weiterhin kann die mobile Reinigungseinheit 410 mindestens eine Energiequelle umfassen, beispielsweise mindestens ein Stromaggregat 430.

### Bezugszeichenliste

- 110: Reinigungsvorrichtung
- 112: Atemgeräte
- 114: Spülmaschine
- 116: Reinigungskammer
- 118: Spülkammer
- 120: Tür
- 122: Fluideinrichtung
- 124: Düsen
- 126: Waschdüsensystem
- 128: Nachspüldüsensystem
- 130: Waschleitungssystem
- 132: Reinigungsfluid, Waschfluid
- 134: Waschtank
- 136: Umwälzpumpe
- 138: Heizelement
- 140: Temperatursensor
- 142: Niveausensor
- 144: Ablaufleitung
- 146: Ablaufpumpe
- 148: Abfluss
- 150: Dosiersystem
- 152: Nachspülleitungssystem
- 154: Reinigungsfluid, Nachspülfluid
- 156: Nachspültank
- 158: Nachspültankheizung
- 160: Temperatursensor
- 162: Niveausensor
- 164: Zulauf
- 166: Ventil
- 168: Dosiersystem
- 170: Umkehrosmoseeinrichtung
- 171: Frischwasserzulauf
- 172: Drucksteigerungspumpe
- 174: Halterung
- 176: Steuerung
- 178: Auflagefläche
- 180: Halteelement
- 182: Korb
- 184: Verbindungselement
- 186: Atemmaske
- 188: Sichtscheibe
- 190: Zubehör
- 192: Lungenautomat
- 194: Ventil
- 196: gasführendes Element
- 198: Gasleitung
- 200: Anschluss
- 202: Druckbeaufschlagungsvorrichtung
- 204: Druckanschluss
- 205: Adapter
- 206: Anschluss für Lungenautomat
- 208: Verbindungselement
- 209: integrierte Druckgasquelle
- 210: externer Druckanschluss
- 212: Druckgasleitung
- 214: Kupplung
- 216: Druckgasleitung
- 218: Ventile
- 310: Wagen
- 312: Rollwagen
- 314: Abrollcontainer
- 316: Auflagefläche
- 318: Basisplatte
- 320: Fahrwerk
- 322: Schubgestell
- 324: Griff
- 326: Bremse
- 410: Mobile Reinigungseinheit
- 412: Abwassertank
- 414: Frischwassertank
- 416: Druckgasquelle
- 418: Druckgaspistole
- 420: Schrankelement
- 422: Arbeitsplatte
- 424: Spülbecken
- 426: Handbrause
- 428: Reinigungsmittel
- 430: Stromaggregat

## Patentansprüche

1. Mobile Reinigungseinheit (410) zur Reinigung von Atemgeräten (112), umfassend:
- mindestens einen Wagen (310) mit mindestens einer Auflagefläche (316) und mindestens einem Fahrwerk (320);
- mindestens eine auf dem Wagen (310) montierte Druckgasquelle (416); und
- mindestens eine auf dem Wagen (310) montierte Reinigungsvorrichtung (110) zur Reinigung der Atemgeräte (112), wobei die Reinigungsvorrichtung (110) umfasst:
∘ mindestens eine Reinigungskammer (116) zur Aufnahme mindestens eines Atemgeräts (112),
∘ mindestens eine Fluideinrichtung (122) zur Beaufschlagung des Atemgeräts (112) mit mindestens einer Reinigungsflüssigkeit, wobei die Fluideinrichtung (122) mindestens eine Düse (124) aufweist, **dadurch gekennzeichnet dass** die Reinigungsvorrichtung umfasst :
∘ mindestens eine in die Reinigungskammer (116) einbringbare Halterung (174) zur Aufnahme des Atemgeräts (112), wobei die Halterung (174) eingerichtet ist, um das Atemgerät (112) relativ zu der Fluideinrichtung (122) auszurichten,
∘ mindestens eine mit der Druckgasquelle (416) verbindbare Druckbeaufschlagungsvorrichtung (202) mit mindestens einem Druckanschluss (204), wobei der Druckanschluss (204) mit mindestens einem gasführenden Element (196) des Atemgeräts (112) verbindbar ist, wobei die Druckbeaufschlagungsvorrichtung (202) eingerichtet ist, um das gasführende Element mit Druckgas zu beaufschlagen, während das Atemgerät mit dem Reinigungsfluid beaufschlagt wird
- und dass der Wagen (310) mindestens ein Schubgestell (322) mit mindestens einem Griff (324) aufweist, wobei der Griff (324) mit einer Bremse (326) ausgestattet ist.

2. Mobile Reinigungseinheit (410) nach dem vorhergehenden Anspruch, wobei die mobile Reinigungseinheit (410) weiterhin mindestens eine mit der Druckgasquelle (416) verbindbare Druckgaspistole (418) zum Ausblasen der Atemgeräte (112) aufweist.

3. Mobile Reinigungseinheit (410) nach einem der vorhergehenden Ansprüche, weiterhin umfassend mindestens ein Element, ausgewählt aus der Gruppe bestehend aus:
- mindestens einem auf dem Wagen (310) montierten Abwassertank (412), wobei der Abwassertank (412) mit mindestens einem Abfluss (148) der Reinigungsvorrichtung (110) verbindbar ist;
- mindestens einer auf dem Wagen (310) montierten Abwasseraufbereitungsanlage, wobei die Abwasseraufbereitungsanlage mit mindestens einem Abfluss (148) der Reinigungsvorrichtung (110) verbunden ist;
- mindestens einer auf dem Wagen (310) montierten Abwasser-Hebeanlage;
- mindestens einem auf dem Wagen (310) montierten Frischwassertank (414), wobei der Frischwassertank (414) mit mindestens einem Zulauf (171) der Reinigungsvorrichtung (110) verbindbar ist;
- mindestens einer auf dem Wagen (310) montierten Frischwasseraufbereitungsanlage zur Aufbereitung von Frischwasser, wobei die Frischwasseraufbereitungsanlage mit mindestens einem Zulauf (171) der Reinigungsvorrichtung (110) verbindbar ist.

4. Mobile Reinigungseinheit (410) nach einem der vorhergehenden Ansprüche, weiterhin umfassend mindestens ein auf dem Wagen (310) montiertes Schrankelement (420) zur Aufnahme von Reinigungsutensilien.

5. Mobile Reinigungseinheit (410) nach einem der vorhergehenden Ansprüche, weiterhin umfassend mindestens eine auf dem Wagen (310) montierte Arbeitsplatte (422).

6. Mobile Reinigungseinheit (410) nach einem der vorhergehenden Ansprüche, weiterhin umfassend mindestens ein auf dem Wagen (310) montiertes Stromaggregat (430).

7. Mobile Reinigungseinheit (410) nach einem der vorhergehenden Ansprüche, weiterhin umfassend mindestens ein auf dem Wagen (310) montiertes Spülbecken (424).

8. Mobile Reinigungseinheit (410) nach einem der vorhergehenden Ansprüche, weiterhin umfassend mindestens eine auf dem Wagen (310) montierte Handbrause (426).

9. Mobile Reinigungseinheit (410) nach einem der vorhergehenden Ansprüche, wobei der Wagen (310) ein Grundmaß einer genormten Transportpalette aufweist.

10. Mobile Reinigungseinheit (410) nach einem der vorhergehenden Ansprüche, wobei die Beaufschlagung des Atemgeräts (112) mit der mindestens einen Reinigungsflüssigkeit in Form eines direkten Beaufschlagens erfolgt, wobei aus der Fluideinrichtung (122) austretendes Reinigungsfluid unmittelbar auf das Atemgerät (112) auftrifft, wobei die Beaufschlagung ausgewählt ist aus einem Besprühen, Betropfen, Bestrahlen oder eine Kombination der genannten Beaufschlagungsarten.

11. Mobile Reinigungseinheit (410) nach einem der vorhergehenden Ansprüche, wobei der Druckanschluss (204) eine Mehrzahl unterschiedlicher Adapter (205) zur Verbindung mit unterschiedlichen Arten gasführender Elemente (196) aufweist.

12. Mobile Reinigungseinheit (410) nach einem der vorhergehenden Ansprüche, wobei der Druckanschluss (204) zumindest teilweise in die Halterung (174) integriert ist.

13. Verfahren zur Reinigung eines Atemgeräts (112), umfassend eine Verwendung einer mobilen Reinigungseinheit (410) nach einem der vorhergehenden, eine mobile Reinigungseinheit (410) betreffenden Ansprüche.

## Claims

1. Mobile cleaning unit (410) for cleaning breathing apparatus (112), comprising:
- at least one trolley (310) with at least one support surface (316) and with at least one running gear (320);
- at least one pressurized-gas source (416) mounted on the trolley (310); and
- at least one cleaning appliance (110) which is mounted on the trolley (310) and which serves for the cleaning of the breathing apparatus (112), wherein the cleaning appliance (110) comprises:
o at least one cleaning chamber (116) for accommodating at least one breathing apparatus (112),
o at least one fluid device (122) for applying at least one cleaning liquid to the breathing apparatus (112), wherein the fluid device (122) has at least one nozzle (124), **characterized in that** the cleaning appliance comprises:
o at least one holder (174) which can be introduced into the cleaning chamber (116) and which serves for accommodating the breathing apparatus (112), wherein the holder (174) is configured to orient the breathing apparatus (112) relative to the fluid device (122),
o at least one pressure-applying appliance (202) which is connectable to the pressurized-gas source (416) and which has at least one pressure connector (204), wherein the pressure connector (204) is connectable to at least one gas-conducting element (196) of the breathing apparatus (112), wherein the pressure-applying appliance (202) is configured to charge the gas-conducting element with pressurized gas while the cleaning fluid is applied to the breathing apparatus
- and **in that** the trolley (310) has at least one push frame (322) with at least one handle (324), wherein the handle (324) is equipped with a brake (326).

2. Mobile cleaning unit (410) according to the preceding claim, wherein the mobile cleaning unit (410) furthermore has at least one pressurized-gas pistol (418) which is connectable to the pressurized-gas source (416) and which serves for blow-drying the breathing apparatus (112).

3. Mobile cleaning unit (410) according to either of the preceding claims, furthermore comprising at least one element selected from the following group:
- at least one waste water tank (412) mounted on the trolley (310), wherein the waste water tank (412) is connectable to at least one drain (148) of the cleaning appliance (110);
- at least one waste water treatment system mounted on the trolley (310), wherein the waste water treatment system is connected to at least one drain (148) of the cleaning appliance (110);
- at least one waste water lifting system mounted on the trolley (310);
- at least one fresh water tank (414) mounted on the trolley (310), wherein the fresh water tank (414) is connectable to at least one feed (171) of the cleaning appliance (110);
- at least one fresh water treatment system which is mounted on the trolley (310) and which serves for the treatment of fresh water, wherein the fresh water treatment system is connectable to at least one feed (171) of the cleaning appliance (110).

4. Mobile cleaning unit (410) according to any of the preceding claims, furthermore comprising at least one cabinet element (420) which is mounted on the trolley (310) and which serves for accommodating cleaning utensils.

5. Mobile cleaning unit (410) according to any of the preceding claims, furthermore comprising at least one work surface (422) mounted on the trolley (310).

6. Mobile cleaning unit (410) according to any of the preceding claims, furthermore comprising at least one power unit (430) mounted on the trolley (310).

7. Mobile cleaning unit (410) according to any of the preceding claims, furthermore comprising at least one washbasin (424) mounted on the trolley (310).

8. Mobile cleaning unit (410) according to any of the preceding claims, furthermore comprising at least one hand shower (426) mounted on the trolley (310).

9. Mobile cleaning unit (410) according to any of the preceding claims, wherein the trolley (310) has a basic dimension of a standardized transport pallet.

10. Mobile cleaning unit (410) according to any of the preceding claims, wherein the application of the at least one cleaning liquid to the breathing apparatus (112) is performed in the form of a direct application, wherein cleaning fluid emerging from the fluid device (122) impinges directly on the breathing apparatus (112), wherein the application is selected from application in spray form, application in droplet form, application in jet form or a combination of the stated types of application.

11. Mobile cleaning unit (410) according to any of the preceding claims, wherein the pressure connector (204) has a multiplicity of different adapters (205) for connection to different types of gas-conducting elements (196) .

12. Mobile cleaning unit (410) according to any of the preceding claims, wherein the pressure connector (204) is at least partially integrated into the holder (174).

13. Method for cleaning a breathing apparatus (112), comprising the use of a mobile cleaning unit (410) according to any of the preceding claims relating to a mobile cleaning unit (410).

## Revendications

1. Unité de nettoyage mobile (410) destinée à nettoyer des appareils respiratoires (112), comprenant :
- au moins un chariot (310) avec au moins une surface d'appui (316) et au moins un train de roulement (320) ;
- au moins une source de gaz comprimé (416) montée sur le chariot (310) ; et
- au moins un dispositif de nettoyage (110) monté sur le chariot (310), destiné à nettoyer les appareils respiratoires (112), le dispositif de nettoyage (110) comprenant :
o au moins une chambre de nettoyage (116) destinée à recevoir au moins un appareil respiratoire (112),
o au moins un système fluidique (122) destiné à soumettre l'appareil respiratoire (112) à l'action d'au moins un liquide de nettoyage, le système fluidique (122) comportant au moins une buse (124), **caractérisée en ce que** le dispositif de nettoyage comprend :
o au moins une fixation (174) pouvant être introduite dans la chambre de nettoyage (116), destinée à recevoir l'appareil respiratoire (112), la fixation (174) étant mise au point pour orienter l'appareil respiratoire (112) par rapport au système fluidique (122),
o au moins un dispositif d'application de pression (202) pouvant être relié à la source de gaz comprimé (416) avec au moins un raccord de pression (204), le raccord de pression (204) pouvant être relié à au moins un élément de guidage de gaz (196) de l'appareil respiratoire (112), le dispositif d'application de pression (202) étant mis au point pour soumettre l'élément de guidage de gaz à l'action d'un gaz comprimé, tandis que l'appareil respiratoire est soumis à l'action du fluide de nettoyage
- et que le chariot (310) comporte au moins un châssis de poussée (322) avec au moins une poignée (324), la poignée (324) étant équipée d'un frein (326).

2. Unité de nettoyage mobile (410) selon la revendication précédente, l'unité de nettoyage mobile (410) comportant par ailleurs au moins un pistolet à gaz comprimé (418) pouvant être relié à la source de gaz comprimé (416), destiné à souffler les appareils respiratoires (112).

3. Unité de nettoyage mobile (410) selon l'une des revendications précédentes, comprenant par ailleurs au moins un élément choisi dans le groupe comprenant :
- au moins un réservoir d'eaux usées (412) monté sur le chariot (310), le réservoir d'eaux usées (412) pouvant être relié à au moins une évacuation (148) du dispositif de nettoyage (110) ;
- au moins une installation de traitement des eaux usées montée sur le chariot (310), l'installation de traitement des eaux usées étant reliée à au moins une évacuation (148) du dispositif de nettoyage (110) ;
- au moins une installation de levage des eaux usées montée sur le chariot (310) ;
- au moins un réservoir d'eau fraîche (414) monté sur le chariot (310), le réservoir d'eau fraîche (414) pouvant être relié à au moins une arrivée (171) du dispositif de nettoyage (110) ;
- au moins une installation de traitement d'eau fraîche montée sur le chariot (310), destinée à traiter de l'eau fraîche, l'installation de traitement d'eau fraîche pouvant être reliée à au moins une arrivée (171) du dispositif de nettoyage (110).

4. Unité de nettoyage mobile (410) selon l'une des revendications précédentes, comprenant par ailleurs au moins un élément d'armoire (420) monté sur le chariot (310), destiné à recevoir des ustensiles de nettoyage.

5. Unité de nettoyage mobile (410) selon l'une des revendications précédentes, comprenant par ailleurs au moins un plateau de travail (422) monté sur le chariot (310).

6. Unité de nettoyage mobile (410) selon l'une des revendications précédentes, comprenant par ailleurs au moins un groupe électrogène (430) monté sur le chariot (310).

7. Unité de nettoyage mobile (410) selon l'une des revendications précédentes, comprenant par ailleurs au moins un bac de rinçage (424) monté sur le chariot (310).

8. Unité de nettoyage mobile (410) selon l'une des revendications précédentes, comprenant par ailleurs au moins une douchette manuelle (426) montée sur le chariot (310).

9. Unité de nettoyage mobile (410) selon l'une des revendications précédentes, le chariot (310) présentant une dimension de base d'une palette de transport standard.

10. Unité de nettoyage mobile (410) selon l'une des revendications précédentes, l'application de l'au moins un liquide de nettoyage sur l'appareil respiratoire (112) étant effectuée sous la forme d'une application directe, du fluide de nettoyage sortant du système fluidique (122) parvenant directement sur l'appareil respiratoire (112), l'application étant choisie parmi une pulvérisation, une application au goutte-à-goutte, une irradiation ou une combinaison desdits modes d'application.

11. Unité de nettoyage mobile (410) selon l'une des revendications précédentes, le raccord de pression (204) comportant une multitude de différents adaptateurs (205) destinés à être reliés à différents types d'éléments de guidage de gaz (196).

12. Unité de nettoyage mobile (410) selon l'une des revendications précédentes, le raccord de pression (204) étant intégré au moins en partie dans la fixation (174).

13. Procédé de nettoyage d'un appareil respiratoire (112), comprenant une utilisation d'une unité de nettoyage mobile (410) selon l'une des revendications précédentes concernant une unité de nettoyage mobile (410).
